# EUROPEAN PATENT SPECIFICATION

(11) **EP 4 214 985 B1**
(45) Date of publication and mention of the grant of the patent: **11.03.2026**
(21) Application number: 20953711.7
(22) Date of filing: 18.09.2020
(51) Int. Cl.: H04W 74/0833, H04W 74/0836, H04W 74/0838

(54) **IMPROVED MONITORING FOR RANDOM ACCESS**
VERBESSERTE ÜBERWACHUNG FÜR DIREKTZUGRIFF
SURVEILLANCE AMÉLIORÉE POUR UN ACCÈS ALÉATOIRE

(43) Date of publication of application: 26.07.2023
(73) Proprietor: QUALCOMM INCORPORATED, San Diego, California 92121-1714 (US)
(72) Inventor: OZTURK, Ozcan, San Diego, California 92121-1714 (US); ZHENG, Ruiming, San Diego, California 92121-1714 (US)
(74) Representative: Bardehle Pagenberg Partnerschaft mbB Patentanwälte Rechtsanwälte
(86) International application number: PCT/CN2020/116250
(87) International publication number: WO 2022/056853

(56) References cited:
- WO-A1-2019/031671
- WO-A1-2020/164035
- CN-A- 109 275 187
- CN-A- 110 351 879
- CN-A- 111 294 937
- US-A1- 2019 223 224
- US-A1- 2020 245 161
- VIVO: "Discussion on the MsgB Response Window for 2-step CFRA", 3GPP DRAFT; R2-2000144, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. E-meeting; 20200224 - 20200306, 14 February 2020 (2020-02-14), Mobile Competence Centre ; 650, route des Lucioles ; F-06921 Sophia-Antipolis Cedex ; France , XP051848828

## Description

### TECHNICAL FIELD

The technology discussed below relates generally to wireless communication networks, and more particularly, to techniques for monitoring for random access messages.

### INTRODUCTION

In 5G New Radio wireless communication networks, in order for a user equipment (UE) to gain access to a cell either initially or after link failure, a UE may perform a random access procedure over a physical random access channel (PRACH). In an example of a random access procedure, a UE may transmit a first random access message to a base station including a request for initial access. For example, the UE may randomly select a PRACH preamble from an available set of preambles within the cell served by the base station and transmit the selected PRACH preamble in a RACH occasion (e.g., time-frequency resources allocated for the first random access message). Upon successfully receiving the PRACH preamble, the base station may transmit a second random access message (e.g., a random access response) including an identifier of the preamble sent by the UE, a Timing Advance (TA), a temporary cell radio network temporary identifier (TC-RNTI) or random access (RA) RNTI for the UE and a grant of assigned uplink (UL) resources.

The random access procedure implemented in the cell may be referred to as a two-step RACH procedure or a four-step RACH procedure. In the four-step RACH procedure, since the preamble is selected randomly by the UE, if another UE selects the same preamble in the same RACH occasion, a collision may result between the two scheduled entities. Any collisions may then be resolved using a contention resolution procedure in which the UE transmits a third random access message (e.g., uplink message) including an identifier of the UE using the TA and assigned uplink resources in the second random access message. Upon successfully decoding the third random access message, the base station transmits a fourth random access message (e.g., a contention resolution message) including the identifier of the UE. The four-step RACH procedure can be compressed into the two-step RACH procedure by the UE transmitting a combined first random access message that includes the RACH preamble and the uplink message for contention resolution. The base station may then respond with a combined second random access message that includes the random access response and the contention resolution message.

WO 2020/164035 A1 provides a first method, a first computer-readable medium, and a first apparatus. The first apparatus may be a UE. The first apparatus may generate a payload of a first preamble message associated with a first RACH procedure, and the payload may indicate a first priority of the first RACH procedure that is relatively higher than a second priority of a second RACH procedure. The first apparatus may send the first preamble message including a RACH preamble and the payload to a base station, and the first preamble message may indicate an identifier (ID) of the first apparatus.

US 2020/245161 A1 discloses a radio terminal that receives from a base station a first value of a first radio resource configuration information element. The first value is associated with normal coverage or with a first coverage enhancement level. The radio terminal derives a second value of the first radio resource configuration information element by converting the first value using a value of a conversion factor. The second value is associated with a second coverage enhancement level. It is thus, for example, possible to contribute to reduction of data size necessary for the base station to notify the radio terminal of a plurality of radio resource configurations for a plurality of coverage enhancement levels.

### BRIEF SUMMARY OF SOME EXAMPLES

The invention is defined by the independent claims. Further embodiments are described by the dependent claims.

### BRIEF DESCRIPTION OF THE DRAWINGS

FIG. 1 is a schematic illustration of a wireless communication system according to some aspects.
FIG. 2 is a conceptual illustration of an example of a radio access network according to some aspects.
FIG. 3 is a schematic diagram illustrating organization of wireless resources in an air interface utilizing orthogonal frequency divisional multiplexing (OFDM) according to some aspects.
FIG. 4 is a diagram illustrating an example of a contention based random access procedure utilizing a random access channel (RACH) according to some aspects.
FIG. 5 is a diagram illustrating an example two-step RACH procedure according to some aspects.
FIG. 6 is a diagram illustrating monitoring windows for random access according to some aspects.
FIG. 7 is a block diagram illustrating an example of a hardware implementation for user equipment (UE) employing a processing system according to some aspects.
FIG. 8 is a block diagram illustrating an example of a hardware implementation for a base station employing a processing system according to some aspects.
FIG. 9 is a flow chart illustrating an exemplary process for selecting a random access monitoring window at a UE according to some aspects.
FIG. 10 is a flow chart illustrating an exemplary process for selecting a random access monitoring window at a base station according to some aspects.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

While aspects and embodiments are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, embodiments and/or uses may come about via integrated chip embodiments and other non-module-component based devices (e.g., end-user devices, vehicles, communication devices, computing devices, industrial equipment, retail/purchasing devices, medical devices, AI-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or OEM devices or systems incorporating one or more aspects of the described innovations. In some practical settings, devices incorporating described aspects and features may also necessarily include additional components and features for implementation and practice of claimed and described embodiments. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes and constitution.

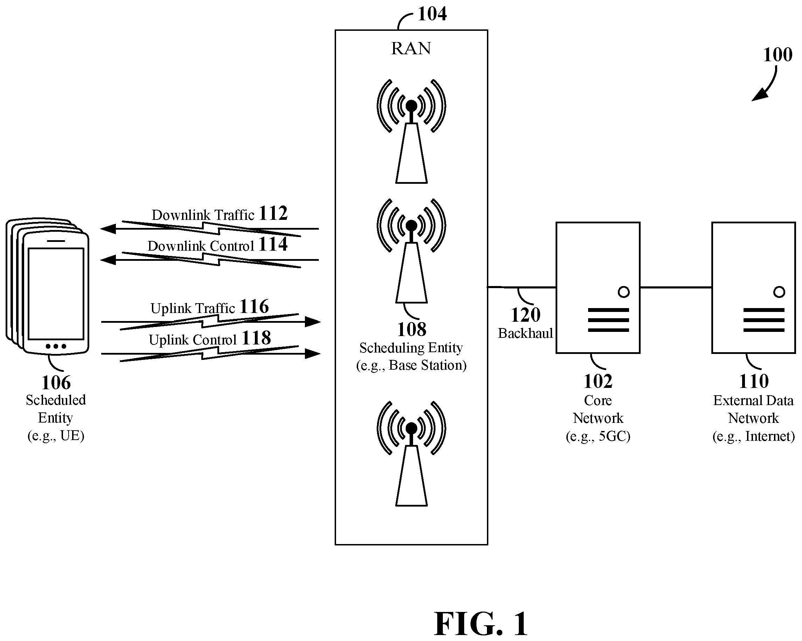

The various concepts presented throughout this disclosure may be implemented across a broad variety of telecommunication systems, network architectures, and communication standards. Referring now to FIG. 1, as an illustrative example without limitation, various aspects of the present disclosure are illustrated with reference to a wireless communication system 100. The wireless communication system 100 includes three interacting domains: a core network 102, a radio access network (RAN) 104, and a user equipment (UE) 106. By virtue of the wireless communication system 100, the UE 106 may be enabled to carry out data communication with an external data network 110, such as (but not limited to) the Internet.

The RAN 104 may implement any suitable radio access technology (RAT) or RATs to provide radio access to the UE 106. As one example, the RAN 104 may operate according to 3rd Generation Partnership Project (3GPP) New Radio (NR) specifications, often referred to as 5G. As another example, the RAN 104 may operate under a hybrid of 5G NR and Evolved Universal Terrestrial Radio Access Network (eUTRAN) standards, often referred to as LTE. The 3GPP refers to this hybrid RAN as a next-generation RAN, or NG-RAN. In another example, the RAN 104 may operate according to both the LTE and 5G NR standards. Of course, many other examples may be utilized within the scope of the present disclosure.

As illustrated, the RAN 104 includes a plurality of base stations 108. Broadly, a base station is a network element in a radio access network responsible for radio transmission and reception in one or more cells to or from a UE. In different technologies, standards, or contexts, a base station may variously be referred to by those skilled in the art as a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP) or some other suitable terminology. In some examples, a base station may include two or more TRPs that may be collocated or non-collocated. Each TRP may communicate on the same or different carrier frequency within the same or different frequency band. In examples where the RAN 104 operates according to both the LTE and 5G NR standards, one of the base stations 108 may be an LTE base station, while another base station may be a 5G NR base station.

The radio access network 104 is further illustrated supporting wireless communication for multiple mobile apparatuses. A mobile apparatus may be referred to as user equipment (UE) 106 in 3GPP standards, but may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. A UE 106 may be an apparatus that provides a user with access to network services. In examples where the RAN 104 operates according to both the LTE and 5G NR standards, the UE 106 may be an Evolved-Universal Terrestrial Radio Access Network - New Radio dual connectivity (EN-DC) UE that is capable of simultaneously connecting to an LTE base station and a NR base station to receive data packets from both the LTE base station and the NR base station.

Within the present document, a "mobile" apparatus need not necessarily have a capability to move, and may be stationary. The term mobile apparatus or mobile device broadly refers to a diverse array of devices and technologies. UEs may include a number of hardware structural components sized, shaped, and arranged to help in communication; such components can include antennas, antenna arrays, RF chains, amplifiers, one or more processors, etc. electrically coupled to each other. For example, some non-limiting examples of a mobile apparatus include a mobile, a cellular (cell) phone, a smart phone, a session initiation protocol (SIP) phone, a laptop, a personal computer (PC), a notebook, a netbook, a smartbook, a tablet, a personal digital assistant (PDA), and a broad array of embedded systems, e.g., corresponding to an "Internet of Things". A mobile apparatus may additionally be an automotive or other transportation vehicle, a remote sensor or actuator, a robot or robotics device, a satellite radio, a global positioning system (GPS) device, an object tracking device, a drone, a multi-copter, a quad-copter, a remote control device, a consumer and/or wearable device, such as eyewear, a wearable camera, a virtual reality device, a smart watch, a health or fitness tracker, a digital audio player (e.g., MP3 player), a camera, a game console, etc. A mobile apparatus may additionally be a digital home or smart home device such as a home audio, video, and/or multimedia device, an appliance, a vending machine, intelligent lighting, a home security system, a smart meter, etc. A mobile apparatus may additionally be a smart energy device, a security device, a solar panel or solar array, a municipal infrastructure device controlling electric power (e.g., a smart grid), lighting, water, etc., an industrial automation and enterprise device, a logistics controller, agricultural equipment, etc. Still further, a mobile apparatus may provide for connected medicine or telemedicine support, i.e., health care at a distance. Telehealth devices may include telehealth monitoring devices and telehealth administration devices, whose communication may be given preferential treatment or prioritized access over other types of information, e.g., in terms of prioritized access for transport of critical service data, and/or relevant QoS for transport of critical service data.

Wireless communication between a RAN 104 and a UE 106 may be described as utilizing an air interface. Transmissions over the air interface from a base station (e.g., base station 108) to one or more UEs (e.g., UE 106) may be referred to as downlink (DL) transmission. In accordance with certain aspects of the present disclosure, the term downlink may refer to a point-to-multipoint transmission originating at a scheduling entity (described further below; e.g., base station 108). Another way to describe this scheme may be to use the term broadcast channel multiplexing. Transmissions from a UE (e.g., UE 106) to a base station (e.g., base station 108) may be referred to as uplink (UL) transmissions. In accordance with further aspects of the present disclosure, the term uplink may refer to a point-to-point transmission originating at a scheduled entity (described further below; e.g., UE 106).

In some examples, access to the air interface may be scheduled, wherein a scheduling entity (e.g., a base station 108) allocates resources for communication among some or all devices and equipment within its service area or cell. Within the present disclosure, as discussed further below, the scheduling entity may be responsible for scheduling, assigning, reconfiguring, and releasing resources for one or more scheduled entities. That is, for scheduled communication, UEs 106, which may be scheduled entities, may utilize resources allocated by the scheduling entity 108.

Base stations 108 are not the only entities that may function as scheduling entities. That is, in some examples, a UE may function as a scheduling entity, scheduling resources for one or more scheduled entities (e.g., one or more other UEs).

As illustrated in FIG. 1, a scheduling entity 108 may broadcast downlink traffic 112 to one or more scheduled entities 106. Broadly, the scheduling entity 108 is a node or device responsible for scheduling traffic in a wireless communication network, including the downlink traffic 112 and, in some examples, uplink traffic 116 from one or more scheduled entities 106 to the scheduling entity 108. On the other hand, the scheduled entity 106 is a node or device that receives downlink control information 114, including but not limited to scheduling information (e.g., a grant), synchronization or timing information, or other control information from another entity in the wireless communication network such as the scheduling entity 108.

In addition, the uplink and/or downlink control information and/or traffic information may be time-divided into frames, subframes, slots, and/or symbols. As used herein, a symbol may refer to a unit of time that, in an orthogonal frequency division multiplexed (OFDM) waveform, carries one resource element (RE) per sub-carrier. A slot may carry 7 or 14 OFDM symbols. A subframe may refer to a duration of 1ms. Multiple subframes or slots may be grouped together to form a single frame or radio frame. Of course, these definitions are not required, and any suitable scheme for organizing waveforms may be utilized, and various time divisions of the waveform may have any suitable duration.

In general, base stations 108 may include a backhaul interface for communication with a backhaul portion 120 of the wireless communication system. The backhaul 120 may provide a link between a base station 108 and the core network 102. Further, in some examples, a backhaul network may provide interconnection between the respective base stations 108. Various types of backhaul interfaces may be employed, such as a direct physical connection, a virtual network, or the like using any suitable transport network.

The core network 102 may be a part of the wireless communication system 100, and may be independent of the radio access technology used in the RAN 104. In some examples, the core network 102 may be configured according to 5G standards (e.g., 5GC). In other examples, the core network 102 may be configured according to a 4G evolved packet core (EPC), or any other suitable standard or configuration.

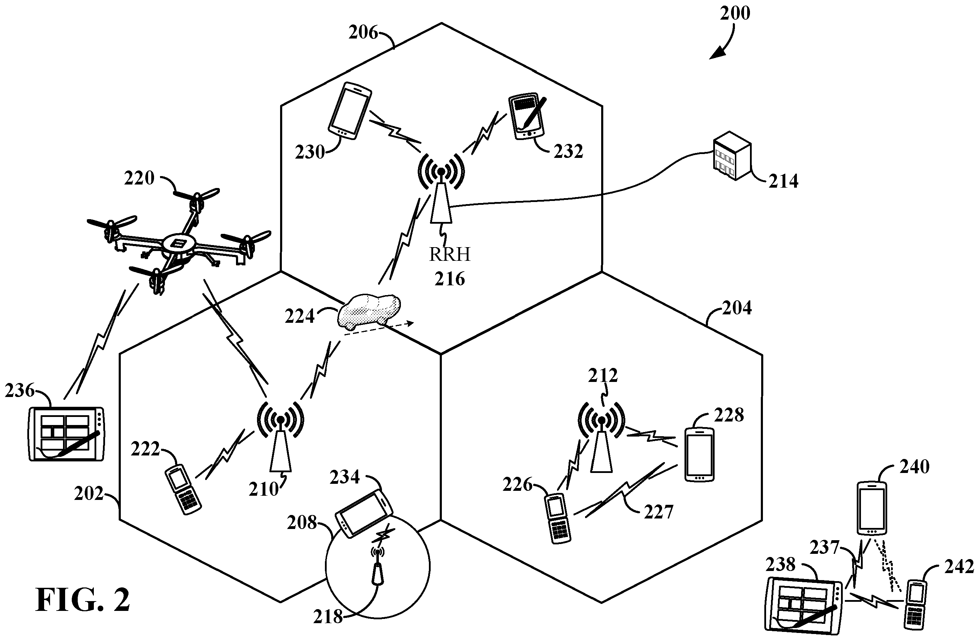

Referring now to FIG. 2, by way of example and without limitation, a schematic illustration of a RAN 200 is provided. In some examples, the RAN 200 may be the same as the RAN 104 described above and illustrated in FIG. 1. The geographic area covered by the RAN 200 may be divided into cellular regions (cells) that can be uniquely identified by a user equipment (UE) based on an identification broadcasted from one access point or base station. FIG. 2 illustrates macrocells 202, 204, and 206, and a small cell 208, each of which may include one or more sectors (not shown). A sector is a sub-area of a cell. All sectors within one cell are served by the same base station. A radio link within a sector can be identified by a single logical identification belonging to that sector. In a cell that is divided into sectors, the multiple sectors within a cell can be formed by groups of antennas with each antenna responsible for communication with UEs in a portion of the cell.

In FIG. 2, two base stations 210 and 212 are shown in cells 202 and 204; and a third base station 214 is shown controlling a remote radio head (RRH) 216 in cell 206. That is, a base station can have an integrated antenna or can be connected to an antenna or RRH by feeder cables. In the illustrated example, the cells 202, 204, and 126 may be referred to as macrocells, as the base stations 210, 212, and 214 support cells having a large size. Further, a base station 218 is shown in the small cell 208 (e.g., a microcell, picocell, femtocell, home base station, home Node B, home eNode B, etc.) which may overlap with one or more macrocells. In this example, the cell 208 may be referred to as a small cell, as the base station 218 supports a cell having a relatively small size. Cell sizing can be done according to system design as well as component constraints.

It is to be understood that the radio access network 200 may include any number of wireless base stations and cells. Further, a relay node may be deployed to extend the size or coverage area of a given cell. The base stations 210, 212, 214, 218 provide wireless access points to a core network for any number of mobile apparatuses. In some examples, the base stations 210, 212, 214, and/or 218 may be the same as the base station/scheduling entity 108 described above and illustrated in FIG. 1.

Within the RAN 200, the cells may include UEs that may be in communication with one or more sectors of each cell. Further, each base station 210, 212, 214, and 218 may be configured to provide an access point to a core network 102 (see FIG. 1) for all the UEs in the respective cells. For example, UEs 222 and 224 may be in communication with base station 210; UEs 226 and 228 may be in communication with base station 212; UEs 230 and 232 may be in communication with base station 214 by way of RRH 216; and UE 234 may be in communication with base station 218. In some examples, the UEs 222, 224, 226, 228, 230, 232, 234, 238, 240, and/or 242 may be the same as the UE/scheduled entity 106 described above and illustrated in FIG. 1.

In some examples, an unmanned aerial vehicle (UAV) 220, which may be a drone or quadcopter, can be a mobile network node and may be configured to function as a UE. For example, the UAV 220 may operate within cell 202 by communicating with base station 210.

In the radio access network 200, the ability for a UE to communicate while moving, independent of its location, is referred to as mobility. The various physical channels between the UE and the radio access network are generally set up, maintained, and released under the control of an access and mobility management function (AMF, not illustrated, part of the core network 102 in FIG. 1), which may include a security context management function (SCMF) that manages the security context for both the control plane and the user plane functionality, and a security anchor function (SEAF) that performs authentication.

A radio access network 200 may utilize DL-based mobility or UL-based mobility to enable mobility and handovers (i.e., the transfer of a UE's connection from one radio channel to another). In a network configured for DL-based mobility, during a call with a scheduling entity, or at any other time, a UE may monitor various parameters of the signal from its serving cell as well as various parameters of neighboring cells. Depending on the quality of these parameters, the UE may maintain communication with one or more of the neighboring cells. During this time, if the UE moves from one cell to another, or if signal quality from a neighboring cell exceeds that from the serving cell for a given amount of time, the UE may undertake a handoff or handover from the serving cell to the neighboring (target) cell. For example, UE 224 (illustrated as a vehicle, although any suitable form of UE may be used) may move from the geographic area corresponding to its serving cell 202 to the geographic area corresponding to a neighbor cell 206. When the signal strength or quality from the neighbor cell 206 exceeds that of its serving cell 202 for a given amount of time, the UE 224 may transmit a reporting message to its serving base station 210 indicating this condition. In response, the UE 224 may receive a handover command, and the UE may undergo a handover to the cell 206.

In a network configured for UL-based mobility, UL reference signals from each UE may be utilized by the network to select a serving cell for each UE. In some examples, the base stations 210, 212, and 214/216 may broadcast unified synchronization signals (e.g., unified Primary Synchronization Signals (PSSs), unified Secondary Synchronization Signals (SSSs) and unified Physical Broadcast Channels (PBCH)). The UEs 222, 224, 226, 228, 230, and 232 may receive the unified synchronization signals, derive the carrier frequency and slot timing from the synchronization signals, and in response to deriving timing, transmit an uplink pilot or reference signal. The uplink pilot signal transmitted by a UE (e.g., UE 224) may be concurrently received by two or more cells (e.g., base stations 210 and 214/216) within the radio access network 200. Each of the cells may measure a strength of the pilot signal, and the radio access network (e.g., one or more of the base stations 210 and 214/216 and/or a central node within the core network) may determine a serving cell for the UE 224. As the UE 224 moves through the radio access network 200, the network may continue to monitor the uplink pilot signal transmitted by the UE 224. When the signal strength or quality of the pilot signal measured by a neighboring cell exceeds that of the signal strength or quality measured by the serving cell, the network 200 may handover the UE 224 from the serving cell to the neighboring cell, with or without informing the UE 224.

Although the synchronization signal transmitted by the base stations 210, 212, and 214/216 may be unified, the synchronization signal may not identify a particular cell, but rather may identify a zone of multiple cells operating on the same frequency and/or with the same timing. The use of zones in 5G networks or other next generation communication networks enables the uplink-based mobility framework and improves the efficiency of both the UE and the network, since the number of mobility messages that need to be exchanged between the UE and the network may be reduced.

In various implementations, the air interface in the radio access network 200 may utilize licensed spectrum, unlicensed spectrum, or shared spectrum. Licensed spectrum provides for exclusive use of a portion of the spectrum, generally by virtue of a mobile network operator purchasing a license from a government regulatory body. Unlicensed spectrum provides for shared use of a portion of the spectrum without need for a government-granted license. While compliance with some technical rules is generally still required to access unlicensed spectrum, generally, any operator or device may gain access. Shared spectrum may fall between licensed and unlicensed spectrum, wherein technical rules or limitations may be required to access the spectrum, but the spectrum may still be shared by multiple operators and/or multiple RATs. For example, the holder of a license for a portion of licensed spectrum may provide licensed shared access (LSA) to share that spectrum with other parties, e.g., with suitable licensee-determined conditions to gain access.

In some examples, access to the air interface may be scheduled, where a scheduling entity (e.g., a base station) allocates resources (e.g., time-frequency resources) for communication among some or all devices and equipment within its service area or cell. Within the present disclosure, as discussed further below, the scheduling entity may be responsible for scheduling, assigning, reconfiguring, and releasing resources for one or more scheduled entities. That is, for scheduled communication, UEs or scheduled entities utilize resources allocated by the scheduling entity.

Base stations are not the only entities that may function as a scheduling entity. That is, in some examples, a UE may function as a scheduling entity, scheduling resources for one or more scheduled entities (e.g., one or more other UEs). For example, two or more UEs (e.g., UEs 238, 240, and 242) may communicate with each other using peer to peer (P2P) or sidelink signals 237 without relaying that communication through a base station. In some examples, the UEs 238, 240, and 242 may each function as a scheduling entity or transmitting sidelink device and/or a scheduled entity or a receiving sidelink device to schedule resources and communicate sidelink signals 237 therebetween without relying on scheduling or control information from a base station. In other examples, two or more UEs (e.g., UEs 226 and 228) within the coverage area of a base station (e.g., base station 212) may also communicate sidelink signals 227 over a direct link (sidelink) without conveying that communication through the base station 246. In this example, the base station 212 may allocate resources to the UEs 226 and 228 for the sidelink communication. In either case, such sidelink signaling 227 and 237 may be implemented in a P2P network, a device-to-device (D2D) network, vehicle-to-vehicle (V2V) network, a vehicle-to-everything (V2X), a mesh network, or other suitable direct link network.

In some examples, a D2D relay framework may be included within a cellular network to facilitate relaying of communication to/from the base station 212 via D2D links (e.g., sidelinks 227 or 237). For example, one or more UEs (e.g., UE 228) within the coverage area of the base station 212 may operate as relaying UEs to extend the coverage of the base station 212, improve the transmission reliability to one or more UEs (e.g., UE 226), and/or to allow the base station to recover from a failed UE link due to, for example, blockage or fading.

The air interface in the radio access network 200 may utilize one or more duplexing algorithms. Duplex refers to a point-to-point communication link where both endpoints can communicate with one another in both directions. Full-duplex means both endpoints can simultaneously communicate with one another. Half-duplex means only one endpoint can send information to the other at a time. Half-duplex emulation is frequently implemented for wireless links utilizing time division duplex (TDD). In TDD, transmissions in different directions on a given channel are separated from one another using time division multiplexing. That is, at some times the channel is dedicated for transmissions in one direction, while at other times the channel is dedicated for transmissions in the other direction, where the direction may change very rapidly, e.g., several times per slot. In a wireless link, a full-duplex channel generally relies on physical isolation of a transmitter and receiver, and suitable interference cancellation technologies. Full-duplex emulation is frequently implemented for wireless links by utilizing frequency division duplex (FDD) or spatial division duplex (SDD). In FDD, transmissions in different directions may operate at different carrier frequencies (e.g., within paired spectrum). In SDD, transmissions in different directions on a given channel are separated from one another using spatial division multiplexing (SDM). In other examples, full-duplex communication may be implemented within unpaired spectrum (e.g., within a single carrier bandwidth), where transmissions in different directions occur within different sub-bands of the carrier bandwidth. This type of full-duplex communication may be referred to herein as sub-band full duplex (SBFD), also known as flexible duplex.

The air interface in the radio access network 200 may further utilize one or more multiplexing and multiple access algorithms to enable simultaneous communication of the various devices. For example, 5G NR specifications provide multiple access for UL transmissions from UEs 222 and 224 to base station 210, and for multiplexing for DL transmissions from base station 210 to one or more UEs 222 and 224, utilizing orthogonal frequency division multiplexing (OFDM) with a cyclic prefix (CP). In addition, for UL transmissions, 5G NR specifications provide support for discrete Fourier transform-spread-OFDM (DFT-s-OFDM) with a CP (also referred to as single-carrier FDMA (SC-FDMA)). However, within the scope of the present disclosure, multiplexing and multiple access are not limited to the above schemes, and may be provided utilizing time division multiple access (TDMA), code division multiple access (CDMA), frequency division multiple access (FDMA), sparse code multiple access (SCMA), resource spread multiple access (RSMA), or other suitable multiple access schemes. Further, multiplexing DL transmissions from the base station 210 to UEs 222 and 224 may be provided utilizing time division multiplexing (TDM), code division multiplexing (CDM), frequency division multiplexing (FDM), orthogonal frequency division multiplexing (OFDM), sparse code multiplexing (SCM), or other suitable multiplexing schemes.

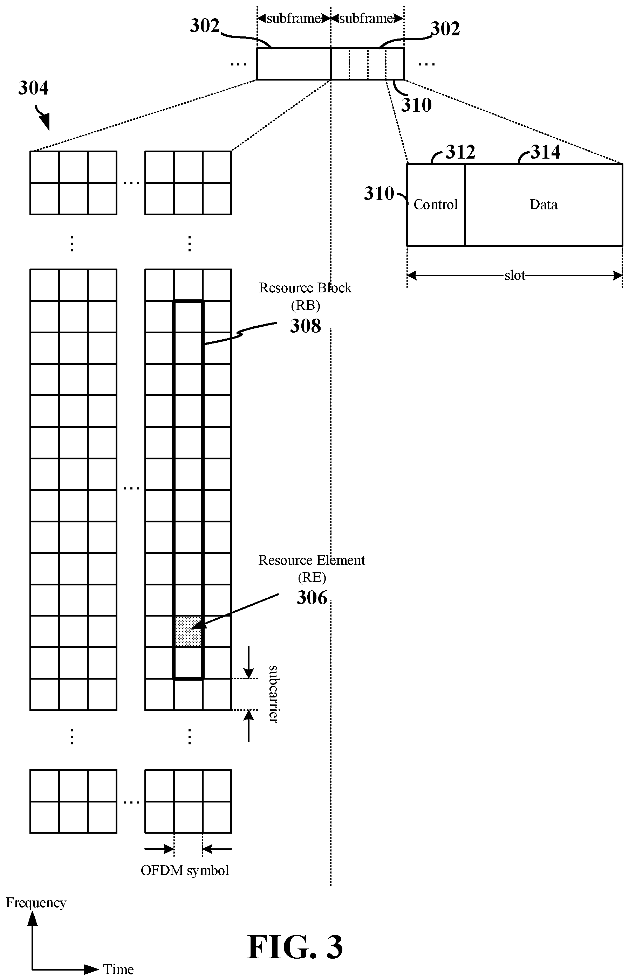

Various aspects of the present disclosure will be described with reference to an OFDM waveform, an example of which is schematically illustrated in FIG. 3. It should be understood by those of ordinary skill in the art that the various aspects of the present disclosure may be applied to an SC-FDMA waveform in substantially the same way as described herein below. That is, while some examples of the present disclosure may focus on an OFDM link for clarity, it should be understood that the same principles may be applied as well to SC-FDMA waveforms.

Referring now to FIG. 3, an expanded view of an exemplary DL subframe 302 is illustrated, showing an OFDM resource grid. However, as those skilled in the art will readily appreciate, the PHY transmission structure for any particular application may vary from the example described here, depending on any number of factors. Here, time is in the horizontal direction with units of OFDM symbols; and frequency is in the vertical direction with units of subcarriers.

The resource grid 304 may be used to schematically represent time-frequency resources for a given antenna port. That is, in a multiple-input-multiple-output (MIMO) implementation with multiple antenna ports available, a corresponding multiple number of resource grids 304 may be available for communication. The resource grid 304 is divided into multiple resource elements (REs) 306. An RE, which is 1 subcarrier × 1 symbol, is the smallest discrete part of the time-frequency grid, and contains a single complex quantity representing data from a physical channel or signal. Depending on the modulation utilized in a particular implementation, each RE may represent one or more bits of information. In some examples, a block of REs may be referred to as a physical resource block (PRB) or more simply a resource block (RB) 308, which contains any suitable number of consecutive subcarriers in the frequency domain. In one example, an RB may include 12 subcarriers, a number independent of the numerology used. In some examples, depending on the numerology, an RB may include any suitable number of consecutive OFDM symbols in the time domain. Within the present disclosure, it is assumed that a single RB such as the RB 308 entirely corresponds to a single direction of communication (either transmission or reception for a given device).

Scheduling of UEs or sidelink devices (hereinafter collectively referred to as UEs) for downlink, uplink, or sidelink transmissions typically involves scheduling one or more resource elements 306 within one or more sub-bands or bandwidth parts (BWPs). Thus, a UE generally utilizes only a subset of the resource grid 304. In some examples, an RB may be the smallest unit of resources that can be allocated to a UE. Thus, the more RBs scheduled for a UE, and the higher the modulation scheme chosen for the air interface, the higher the data rate for the UE. The RBs may be scheduled by a base station (e.g., gNB, eNB, etc.) or may be self-scheduled by a UE/sidelink device implementing D2D sidelink communication.

In this illustration, the RB 308 is shown as occupying less than the entire bandwidth of the subframe 302, with some subcarriers illustrated above and below the RB 308. In a given implementation, the subframe 302 may have a bandwidth corresponding to any number of one or more RBs 308. Further, in this illustration, the RB 308 is shown as occupying less than the entire duration of the subframe 302, although this is merely one possible example.

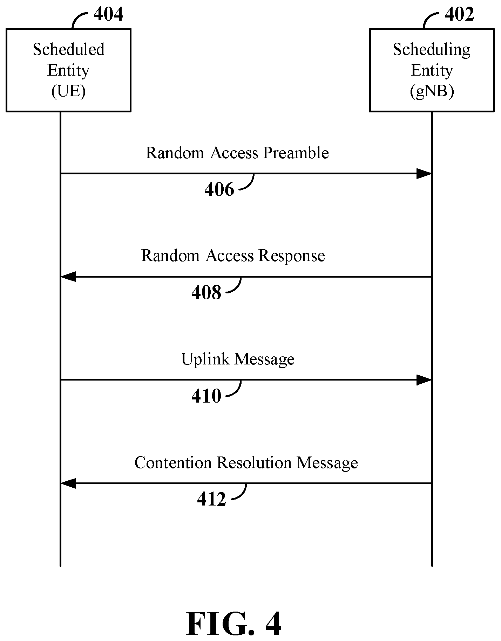

Each 1 ms subframe 302 may consist of one or multiple adjacent slots. In the example shown in FIG. 4, one subframe 302 includes four slots 310, as an illustrative example. In some examples, a slot may be defined according to a specified number of OFDM symbols with a given cyclic prefix (CP) length. For example, a slot may include 7 or 14 OFDM symbols with a nominal CP. Additional examples may include mini-slots, sometimes referred to as shortened transmission time intervals (TTIs), having a shorter duration (e.g., one to three OFDM symbols). These mini-slots or shortened transmission time intervals (TTIs) may in some cases be transmitted occupying resources scheduled for ongoing slot transmissions for the same or for different UEs. Any number of resource blocks may be utilized within a subframe or slot.

An expanded view of one of the slots 310 illustrates the slot 310 including a control region 312 and a data region 314. In general, the control region 312 may carry control channels (e.g., PDCCH), and the data region 314 may carry data channels (e.g., PDSCH or PUSCH). Of course, a slot may contain all DL, all UL, or at least one DL portion and at least one UL portion. The simple structure illustrated in FIG. 3 is merely exemplary in nature, and different slot structures may be utilized, and may include one or more of each of the control region(s) and data region(s).

Although not illustrated in FIG. 3, the various REs 306 within a RB 308 may be scheduled to carry one or more physical channels, including control channels, shared channels, data channels, etc. Other REs 306 within the RB 308 may also carry pilots or reference signals. These pilots or reference signals may provide for a receiving device to perform channel estimation of the corresponding channel, which may enable coherent demodulation/detection of the control and/or data channels within the RB 308.

In some examples, the slot 310 may be utilized for broadcast, multicast, groupcast, or unicast communication. For example, a broadcast, multicast, or groupcast communication may refer to a point-to-multipoint transmission by one device (e.g., a base station, UE, or other similar device) to other devices. Here, a broadcast communication is delivered to all devices, whereas a multicast communication is delivered to multiple intended recipient devices and a groupcast communication is delivered to a group of intended recipient devices. A unicast communication may refer to a point-to-point transmission by a one device to a single other device.

In an example of cellular communication over a cellular carrier via a Uu interface, for a DL transmission, the scheduling entity (e.g., a base station) may allocate one or more REs 306 (e.g., within the control region 312) to carry DL control information including one or more DL control channels, such as a physical downlink control channel (PDCCH), to one or more scheduled entities (e.g., UEs). The PDCCH carries downlink control information (DCI) including but not limited to power control commands (e.g., one or more open loop power control parameters and/or one or more closed loop power control parameters), scheduling information, a grant, and/or an assignment of REs for DL and UL transmissions. The PDCCH may further carry HARQ feedback transmissions such as an acknowledgment (ACK) or negative acknowledgment (NACK). HARQ is a technique well-known to those of ordinary skill in the art, wherein the integrity of packet transmissions may be checked at the receiving side for accuracy, e.g., utilizing any suitable integrity checking mechanism, such as a checksum or a cyclic redundancy check (CRC). If the integrity of the transmission confirmed, an ACK may be transmitted, whereas if not confirmed, a NACK may be transmitted. In response to a NACK, the transmitting device may send a HARQ retransmission, which may implement chase combining, incremental redundancy, etc.

The base station may further allocate one or more REs 306 (e.g., in the control region 312 or the data region 314) to carry other DL signals, such as a demodulation reference signal (DMRS); a phase-tracking reference signal (PT-RS); a channel state information (CSI) reference signal (CSI-RS); and a synchronization signal block (SSB). SSBs may be broadcast at regular intervals based on a periodicity (e.g., 5, 10, 20, 40, 80, or 160 ms). An SSB includes a primary synchronization signal (PSS), a secondary synchronization signal (SSS), and a physical broadcast control channel (PBCH). A UE may utilize the PSS and SSS to achieve radio frame, subframe, slot, and symbol synchronization in the time domain, identify the center of the channel (system) bandwidth in the frequency domain, and identify the physical cell identity (PCI) of the cell.

The PBCH in the SSB may further include a master information block (MIB) that includes various system information, along with parameters for decoding a system information block (SIB). The SIB may be, for example, a SystemInformationType 1 (SIB1) that may include various additional system information. Examples of system information transmitted in the MIB may include, but are not limited to, a subcarrier spacing, system frame number, a configuration of a PDCCH control resource set (CORESET) (e.g., PDCCH CORFSFT0), and a search space for SIB1. Examples of additional system information transmitted in the SIB1 may include, but are not limited to, a random access search space, downlink configuration information, and uplink configuration information. The MIB and SIB1 together provide the minimum system information (SI) for initial access.

In an UL transmission, the scheduled entity (e.g., UE) may utilize one or more REs 306 to carry UL control information (UCI) including one or more UL control channels, such as a physical uplink control channel (PUCCH), to the scheduling entity. UCI may include a variety of packet types and categories, including pilots, reference signals, and information configured to enable or assist in decoding uplink data transmissions. In some examples, the UCI may include a scheduling request (SR), i.e., request for the scheduling entity to schedule uplink transmissions. Here, in response to the SR transmitted on the UCI, the scheduling entity may transmit downlink control information (DCI) that may schedule resources for uplink packet transmissions. UCI may also include HARQ feedback, channel state feedback (CSF), such as a CSI report, or any other suitable UCI.

In addition to control information, one or more REs 306 (e.g., within the data region 314) may be allocated for data traffic. Such data traffic may be carried on one or more traffic channels, such as, for a DL transmission, a physical downlink shared channel (PDSCH); or for an UL transmission, a physical uplink shared channel (PUSCH). In some examples, one or more REs 306 within the data region 314 may be configured to carry other signals, such as one or more SIBs and DMRSs.

In an example of sidelink communication over a sidelink carrier via a PC5 interface, the control region 312 of the slot 310 may include a physical sidelink control channel (PSCCH) including sidelink control information (SCI) transmitted by an initiating (transmitting) sidelink device (e.g., V2X or other sidelink device) towards a set of one or more other receiving sidelink devices. The data region 314 of the slot 310 may include a physical sidelink shared channel (PSSCH) including sidelink data traffic transmitted by the initiating (transmitting) sidelink device within resources reserved over the sidelink carrier by the transmitting sidelink device via the SCI. Other information may further be transmitted over various REs 306 within slot 310. For example, HARQ feedback information may be transmitted in a physical sidelink feedback channel (PSFCH) within the slot 310 from the receiving sidelink device to the transmitting sidelink device. In addition, one or more reference signals, such as a sidelink SSB and/or a sidelink CSI-RS, may be transmitted within the slot 310.

These physical channels described above are generally multiplexed and mapped to transport channels for handling at the medium access control (MAC) layer. Transport channels carry blocks of information called transport blocks (TB). The transport block size (TBS), which may correspond to a number of bits of information, may be a controlled parameter, based on the modulation and coding scheme (MCS) and the number of RBs in a given transmission.

The channels or carriers illustrated in FIG. 3 are not necessarily all of the channels or carriers that may be utilized between devices, and those of ordinary skill in the art will recognize that other channels or carriers may be utilized in addition to those illustrated, such as other traffic, control, and feedback channels.

In order to gain access to a cell, a UE may perform a random access procedure over a physical random access channel (PRACH). The UE may identify a random access search space including PRACH resources for initiating a RACH procedure from the SIB1. For example, a random access process may be commenced after a UE acquires a cell and determines occurrence of a RACH occasion (e.g., PRACH resources) after reading SSB and a SIB1. The SSB provides the initial system information (SI), and the SIB1 (and other SIB blocks) provide the remaining minimum SI (RMSI). For example, the PBCH MIB of the SSB may carry a first part of the SI that a user equipment (UE) needs in order to access a network. The SIBs (e.g., SIB1 and SIB2) can carry the RMSI that a UE needs to gain access to the network.

RACH procedures may be performed in various scenarios, such as loss of uplink synchronization, lack of available PUCCH resources, scheduling request failure, and other use cases. In addition, a RACH procedure may be contention-based or contention-free and may include a 2-step RACH process (contention-based or contention-free), a 3-step RACH process (contention-free), or a 4-step RACH process (contention-based).

FIG. 4 is a diagram illustrating an example of a 4-step contention-based random access (CBRA) procedure 400 between a base station 402 and a UE 404. The base station 402 may correspond, for example, to any of the scheduling entities shown in FIGs. 1 and/or 2. In addition, the UE 404 may correspond, for example, to any of the scheduled entities shown in FIGs. 1 and/or 2.

The random access procedure 400 shown in FIG. 4 is initiated by the UE 404 randomly selecting a preamble from an available set of preambles within the cell served by the base station 402, and transmitting the selected preamble to the base station 402 in a RACH preamble message 406 (msg1). In an example, the UE 404 may select from 64 possible preamble sequences for inclusion in the RACH preamble message 406. The msg1 406 may be transmitted by the UE 404 over a selected PRACH resource with power ramping. The selected PRACH resource may include supplementary uplink resources or normal uplink resources. Here, supplementary uplink resources include lower frequency resources than normal uplink resources. Thus, supplementary uplink resources and uplink resources each correspond to a different respective uplink frequency band. The msg1 406 may further be communicated on a beam selected by the UE 404 based on beam measurements (e.g., RSRP/RSRQ/SINR) performed by the UE 404. The beam may correspond, for example, to an SSB beam.

If the preamble is successfully detected by the base station 402, the base station 402 transmits a random access response (RAR) message 408 (msg2) including a PDCCH and PDSCH to the UE 404. If no msg2 (RAR) 408 is received within a RAR window, the UE 404 may retransmit msg1 406 with power boost. The msg2 408 (PDCCH + PDSCH) includes an identifier of the preamble sent by the UE 404, a Timing Advance (TA), a temporary cell radio network temporary identifier (TC-RNTI) or random access (RA) RNTI for the UE 404 and a grant of assigned uplink (UL) resources. The PDCCH in msg2 408 may be scrambled with the RA-RNTI, which is a function of a RACH occasion (RO) (e.g., time-frequency resources allocated for RACH msg1) that the UE 404 used to send msg1 406. A medium access control - control element (MAC-CE) within the PDSCH provides an acknowledgement of the reception of msg1 and the UL grant. To receive msg2 408, the UE 404 may monitor DCI 1_0 for the PDCCH scrambled with the RA-RNTI corresponding to the RO used by the UE 404 to transmit msg1 406, and if detected, proceeds with PDSCH decoding. Upon receipt of the RAR message 408, the UE 404 compares the preamble ID to the preamble sent by the scheduled entity in the RACH preamble message 406. If the preamble ID matches the preamble sent in the RACH preamble message 406, the UE 404 applies the timing advance and starts a contention resolution procedure.

Since the preamble is selected randomly by the scheduled entity, if another scheduled entity selects the same preamble in the same RO, a collision may result between the two scheduled entities. Any collisions may then be resolved using the contention resolution procedure. During contention resolution, the UE 404 transmits an uplink message (msg3) 410 on the common control channel (CCCH) using the TA and assigned uplink resources in the PDSCH of msg2 408. In an example, the uplink message 410 is a Layer 2/Layer 3 (L2/L3) message, such as a Radio Resource Control (RRC) Connection Request message. The uplink message 410 includes an identifier of the UE 404 (UE-ID) for use by the scheduling entity in resolving any collisions. Although other scheduled entities may transmit colliding uplink messages utilizing the TA and assigned uplink resources, these colliding uplink messages will likely not be successfully decoded at the scheduling entity since the colliding uplink messages were transmitted with TAs that were not intended for those scheduled entities.

Upon successfully decoding the uplink message, the base station 402 transmits a contention resolution message 412 to the UE 404 (msg4). The contention resolution message 412 may be, for example, an RRC-Connection Setup message. In addition, the contention resolution message 412 includes the identifier of the UE 404 that was received in the uplink message 410. The UE 404, upon receiving its own identity back in the contention resolution message 412, concludes that the random access procedure was successful and completes the RRC connection setup process. Any other scheduled entity receiving the RRC-Connection Setup message with the identity of the UE 404 will conclude that the random access procedure failed and re-initialize the random access procedure.

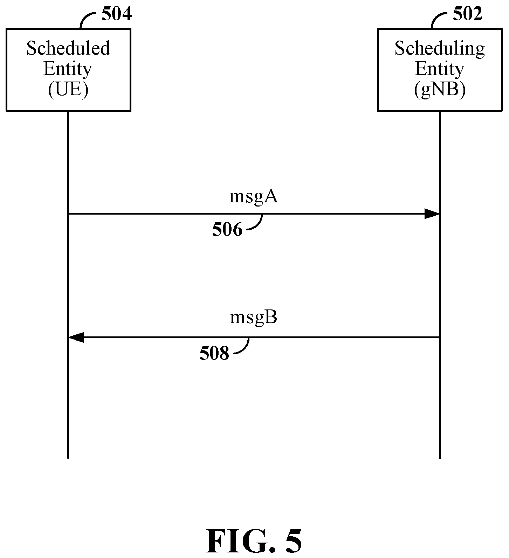

The four-step CBRA procedure 400 can be compressed into the two-step random-access procedure 500 illustrated in FIG. 5. The two-step random-access procedure 500 reduces overhead and latency associated with control signaling by removing a transmission in each direction between the UE 504 and base station or scheduling entity, such as the illustrated gNB 502. In comparison to FIG. 4, the two-step random-access procedure 500 commences with a transmission by the UE 504 of a single message (msgA 506) that includes the RACH preamble message 406 and uplink message 410 sent of the contention-based random-access procedure 400. Here, the uplink message 410 may be a scheduled PUSCH transmission sent over a PUSCH resource and the RACH preamble message 406 may be sent over a selected PRACH resource. The gNB 502 responds with a single message (msgB 508) that includes the random access response 408 and the contention resolution message 412.

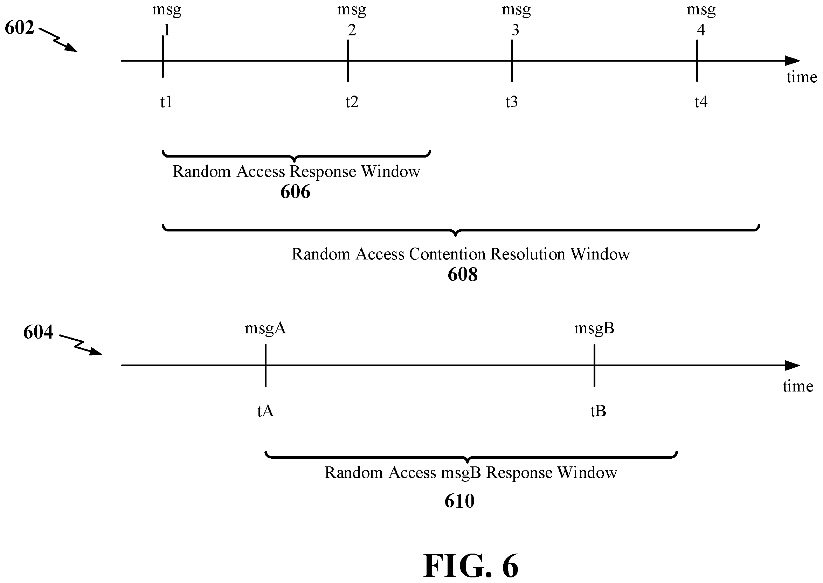

FIG. 6 is a diagram illustrating exemplary monitoring windows for random access according to some aspects. In FIG. 6, the monitoring windows for both a four-step random access procedure 602 and a two-step random access procedure 604 are illustrated. In the four-step random access procedure 602, the UE may transmit msg1 including, for example, a PRACH preamble message, at a first time (t1) and initialize a random access response window 606 for monitoring for a random access response (msg2) upon transmitting the msg1. The UE may further initialize a random access contention resolution window 608 for monitoring for a contention resolution message (msg4) upon transmitting the msg1. As indicated above, during the random access response window 606, the UE monitors DCI 1_0 for the PDCCH scrambled with the RA-RNTI corresponding to the RO used by the UE to transmit msg1. If the UE receives msg 2 within the random access response window 606 (e.g., at a second time (t2)), the UE may proceed with transmission of the uplink message (msg3) at a third time (t3) and then monitor for the contention resolution message (msg4), which may be received, for example, at a fourth time (t4) within the random access contention resolution window 608. If the UE does not receive msg2 within the random access response window 606 or msg4 within the random access contention resolution window 608, the UE may declare a RACH failure and select a new PRACH preamble to start the random access procedure 602 over again.

In the two-step random access procedure 604, the UE may transmit msgA including, for example, the PRACH preamble message and uplink message, at a first time (tA). The UE may further initialize a random access msgB response window 610 for monitoring for msgB upon transmitting the msgA. To complete the random access procedure, the msgB may be received, for example, at a second time (tB) within the random access msgB response window 610. If the UE does not receive msgB within the random access msgB response window 610, the UE may declare a RACH failure and select a new PRACH preamble to start the random access procedure 604 over again.

Fifth generation (5G) wireless communication networks, such as the New Radio (NR) wireless communication network, support communication between a base station and high-end UEs for a plurality of different usage cases, including, for example, enhanced mobile broadband (eMBB) and ultra-reliable and low latency communication (URLLC). NR networks may further support communication between a base station and low-end UEs in massive machine-type communication (mMTC) usage cases. In some examples, LTE-M or Narrowband Internet of Things (NB-IoT) technology may be utilized to meet the requirements of mMTC.

When RACH is performed, a significant of amount of power is utilized at the UE to monitor for the response messages, such as msg2 or msg4 of the four-step random access procedure 400 or msgB of the two-step random access procedure 500. For example, the UE monitors for a PDCCH each slot within a random access monitoring window (e.g., windows 606, 608, and 610) to determine whether there is a response from the base station (gNB) to the UEs random access transmission (e.g., msg2 in the four-step random access procedure 400 or msgA in the two-step random access procedure 500).

For regular high-end UEs and regular traffic, the power consumption for random access monitoring may not be significant compared to the overall power consumption utilized by such high-end UEs. However, for IoT devices and other low-end UEs, the power consumption may represent a large percentage of the overall power consumption. This is especially true for small data transmissions (e.g., short data transmissions), where the low-end UE occasionally transmits a small amount of data and then returns to a sleep state when operating, for example, in a discontinuous reception (DRX) mode.

In both LTE and NR networks, the monitoring window duration for random access is fixed, and as such, there is no mechanism for reducing the monitoring duration based on the UE type (e.g., low-end or high-end) and/or data transmission type (e.g., small data transmissions or regular data transmissions). For example, in a two-step RACH, the random access msgB response window may be up to 40 ms. The UE would need to monitor the downlink for the full 40 ms before declaring a RACH failure regardless of the UE type or data transmission type.

Therefore, various aspects of the disclosure provide a configurable monitoring window for random access. The configurable monitoring window may have a duration of time that may be selected based on one or more factors, such as the UE type or data transmission type. In some examples, the configurable monitoring window may have a reduced duration to limit the time that a UE needs to monitor for a random access message from the base station. The reduced monitoring window duration may be configured as an offset from a transmission time of the first random access message (e.g., msg1 or msgA) by the UE or as a reduced duration of time as measured from the transmission time of the first random access message.

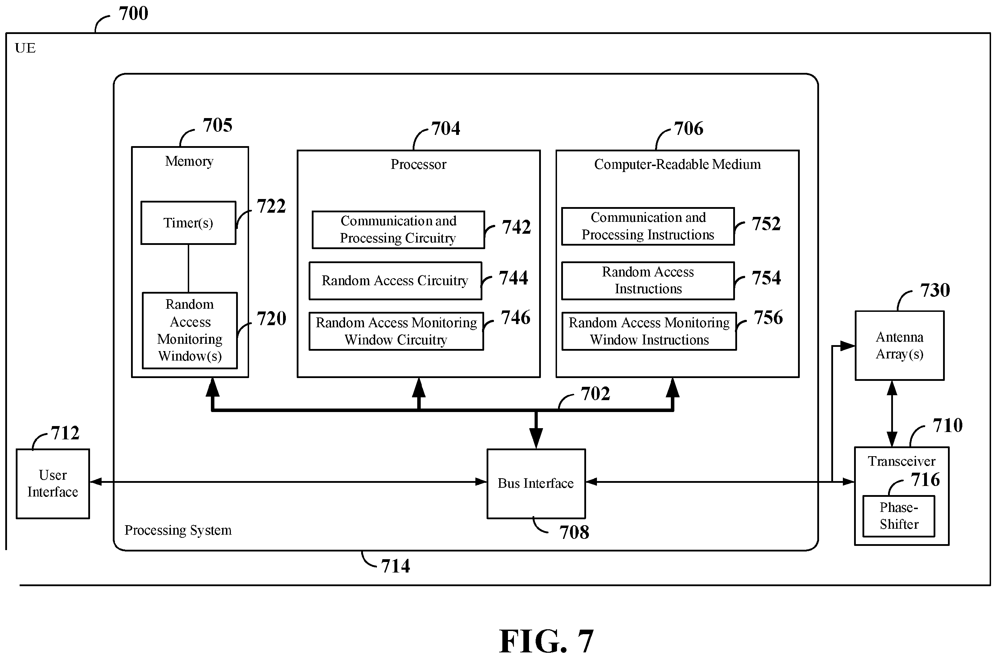

FIG. 7 is a block diagram illustrating an example of a hardware implementation for a user equipment (UE) 700 employing a processing system 714. For example, the UE 700 may correspond to any of the UEs or other scheduled entities shown and described above in reference to FIGs. 1, 2, 4, and/or 5.

The UE 700 may be implemented with a processing system 714 that includes one or more processors 704. Examples of processors 704 include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. In various examples, the UE 700 may be configured to perform any one or more of the functions described herein. That is, the processor 704, as utilized in the UE 700, may be used to implement any one or more of the processes and procedures described below.

In this example, the processing system 714 may be implemented with a bus architecture, represented generally by the bus 702. The bus 702 may include any number of interconnecting buses and bridges depending on the specific application of the processing system 714 and the overall design constraints. The bus 702 links together various circuits including one or more processors (represented generally by the processor 704), a memory 705, and computer-readable media (represented generally by the computer-readable medium 706). The bus 702 may also link various other circuits such as timing sources, peripherals, voltage regulators, and power management circuits, which are well known in the art, and therefore, will not be described any further.

A bus interface 708 provides an interface between the bus 702 and a transceiver 710 and one or more antenna arrays 730 (e.g., one or more antenna panels). The transceiver 710 provides a means for communicating with various other apparatus over a transmission medium (e.g., air interface). Depending upon the nature of the apparatus, a user interface 712 (e.g., keypad, display, touch screen, speaker, microphone, control knobs, etc.) may also be provided. Of course, such a user interface 712 is optional, and may be omitted in some examples.

The processor 704 is responsible for managing the bus 702 and general processing, including the execution of software stored on the computer-readable medium 706. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software, when executed by the processor 704, causes the processing system 714 to perform the various functions described below for any particular apparatus. The computer-readable medium 706 and the memory 705 may also be used for storing data that is manipulated by the processor 704 when executing software.

The computer-readable medium 706 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium 706 may reside in the processing system 714, external to the processing system 714, or distributed across multiple entities including the processing system 714. The computer-readable medium 706 may be embodied in a computer program product. By way of example, a computer program product may include a computer-readable medium in packaging materials. In some examples, the computer-readable medium 706 may be part of the memory 705. Those skilled in the art will recognize how best to implement the described functionality presented throughout this disclosure depending on the particular application and the overall design constraints imposed on the overall system.

In some aspects of the disclosure, the processor 704 may include circuitry configured for various functions. For example, the processor 704 may include communication and processing circuitry 742, configured to communicate with a base station, such as a gNB. In some examples, the communication and processing circuitry 742 may include one or more hardware components that provide the physical structure that performs processes related to wireless communication (e.g., signal reception and/or signal transmission) and signal processing (e.g., processing a received signal and/or processing a signal for transmission).

In some examples, the communication and processing circuitry 742 may be configured to transmit a random access message, such as msg1 or msg3 in a four-step random access procedure or msgA in a two-step random access procedure. The communication and processing circuitry 742 may further be configured to receive a random access message, such as msg2 or msg4 in a four-step random access procedure or msgB in a two-step random access procedure. The communication and processing circuitry 742 may further be configured to execute communication and processing instructions (software) 752 stored in the computer-readable medium 706 to implement one or more of the functions described herein.

The processor 704 may further include random access circuitry 744, configured to execute a random access procedure, such as a two-step random access procedure or a four-step random access procedure. In some examples, the random access circuitry 744 may be configured to select a PRACH preamble for inclusion in msg1 or msgA and to generate and transmit the msg1 or msgA. The PRACH preamble may be randomly selected from an available set of PRACH preambles configured in the cell. In some examples, the set of PRACH preambles may include two or more subsets of PRACH preambles, each associated with a different monitoring window duration. In some examples, the different monitoring window durations may be configured for different UE types or different data transmission types. For example, a first subset of PRACH preambles may be associated with a first monitoring window duration and a second subset of PRACH preambles may be associated with a second monitoring window duration, where the first monitoring window duration may be less than the second monitoring window duration. In this example, the random access circuitry 744 may select the PRACH preamble from one of the subsets of PRACH preambles based on the type of the UE 700 (e.g., low-end or high-end) or data transmission type (e.g., regular or small data transmission) to be transmitted by the UE 700 after completing the random access procedure.

The random access circuitry 744 may further be configured to operate together with the communication and processing circuitry 742 to transmit the msg1 or msgA to the base station. In some examples, the random access circuitry 744 may select an uplink grant to utilize for the transmission of the PUSCH in msgA based on the desired monitoring window duration. For example, the SIB1 may indicate different uplink grants for the PUSCH of msgA for different monitoring window durations. In some examples, the different monitoring window durations may be configured for different UE types or different data transmission types. In this example, the random access circuitry 744 may select the uplink grant for the PUSCH of msgA based on the type of UE 700 (e.g., low-end or high-end) or data transmission type (e.g., regular or small data transmission) to be transmitted by the UE 700 after completing the random access procedure. In some examples, the random access circuitry 744 may generate a payload for the PUSCH of msgA having a payload size based on a selected duration of time for the random access msgB response monitoring window. For example, the payload size of the PUSCH of msgA may be smaller for shorter monitoring window durations and larger for longer monitoring window durations.

The random access circuitry 744 may further be configured to receive and process a msg2. In some examples, the msg2 may include an indication of a selected monitoring window duration for the random access contention resolution window. For example, the msg2 may include a duration of time selected for the random access contention resolution window or an index indicating the selected duration of time. The random access circuitry 744 may further be configured to monitor for the msg2 within a random access response monitoring window.

The random access circuitry 744 may further be configured to generate and transmit a msg3 in response to receiving an uplink grant for msg3 in msg2. In some examples, the uplink grant provided by the base station may indicate the monitoring window duration to utilize for the random access contention resolution monitoring window. In other examples, the uplink grant may include a plurality of uplink grants from which the random access circuitry 744 can select based on the duration of time selected by the UE 700 for the random access contention resolution monitoring window. In some examples, the random access circuitry 744 may generate a payload for the msg3 having a payload size based on a selected duration of time for the random access contention resolution monitoring window. For example, the payload size of the msg3 may be smaller for shorter monitoring window durations and larger for longer monitoring window durations.

The random access circuitry 744 may further be configured to receive and process msg4 of a four-step random access procedure or msgB of a two-step random access proceudre. The random access circuitry 744 may further be configured to monitor for the msg4 during a random access contention resolution window and for the msgB during a random access msgB response window.

The random access circuitry 744 may further be configured to execute the random access procedure during a channel occupancy time (COT) of an unlicensed channel. In this example, the COT may be initiated by the base station and the monitoring window durations (e.g., the random access response monitoring window and random access contention resolution window or the random access msgB response window) occur within the COT. The random access circuitry 744 may further be configured to execute random access instructions (software) 754 stored in the computer-readable medium 706 to implement one or more of the functions described herein.

The processor 704 may further include random access monitoring window circuitry 746, configured to select one or more random access monitoring windows 720 to be utilized by the random access circuitry 744 in monitoring for random access messages from the base station. The random access monitoring windows 720 may include one or more of a random access response window for monitoring for msg2, a random access msgB response window for monitoring for msB, or a random access contention resolution window for monitoring for msg4. The random access monitoring window circuitry 746 may be configured, for example, to select a selected monitoring window 720 for monitoring for a particular random access message (e.g., msg2, msg4, or msgB). The selected monitoring window may be selected from at least a first monitoring window and a second monitoring window, where the first monitoring window has a first duration of time that is different from a second duration of time of the second monitoring window.

In some examples, the random access monitoring window circuitry 746 may be configured to select the selected monitoring window 720 based on a RACH type of a plurality of RACH types. For example, each RACH type may be associated with a different respective UE type or data transmission type. In some examples, the first duration of time of the first monitoring window is less than the second duration of time of the second monitoring window. According to the present invention, the random access monitoring window circuitry 746 is configured to select the first monitoring window having the shorter duration of time when a current data transmission type to be utilized by the UE is the small data transmission type.

The random access monitoring window circuitry 746 may further be configured to initialize a timer 722 with the duration of time of the selected monitoring window 720. Different random access monitoring windows 720 may be selected for each of the random access monitoring window types (e.g., the random access response window, random access msgB response window, and the random access contention resolution window). Thus, the random access monitoring window circuitry 746 may initialize a respective timer 722 for the seleted monitoring window 720 of each monitoring window type.

In some examples, the random access monitoring window circuitry 746 may initialize the timer 722 with the selected monitoring window duration upon transmission of the msg1 or msgA by the random access circuitry 744. In other examples, the random access monitoring window circuitry 746 may initialize the timer 722 with the selected monitoring window duration at a start time offset from the transmission time of msg1 or msgA by an offset amount of time. For example, the start time at which the timer 722 is initialized may be determined by adding the offset amount of time to the transmission time of the msg1 or msgA. In some examples, a different offset amount of time may be configured for each of the random access response window, the random access msgB response window, and the random access contention resolution window.

In some examples, the selected monitoring window 720 may be a random access contention resolution window. In this example, the random access monitoring window circuitry 746 may be configured to update the selected monitoring window 720 (e.g., update the timer 722) upon receiving an indication of the selected monitoring window duration for the random access contention resolution window in msg2. The random access monitoring window circuitry 746 may further be configured to update the selected monitoring window 720 (e.g., update the timer 722) based on the uplink resources allocated for msg3 in msg2. The random access monitoring window circuitry 746 may further be configured to execute random access monitoring window instructions (software) 756 stored in the computer-readable medium 706 to implement one or more of the functions described herein.

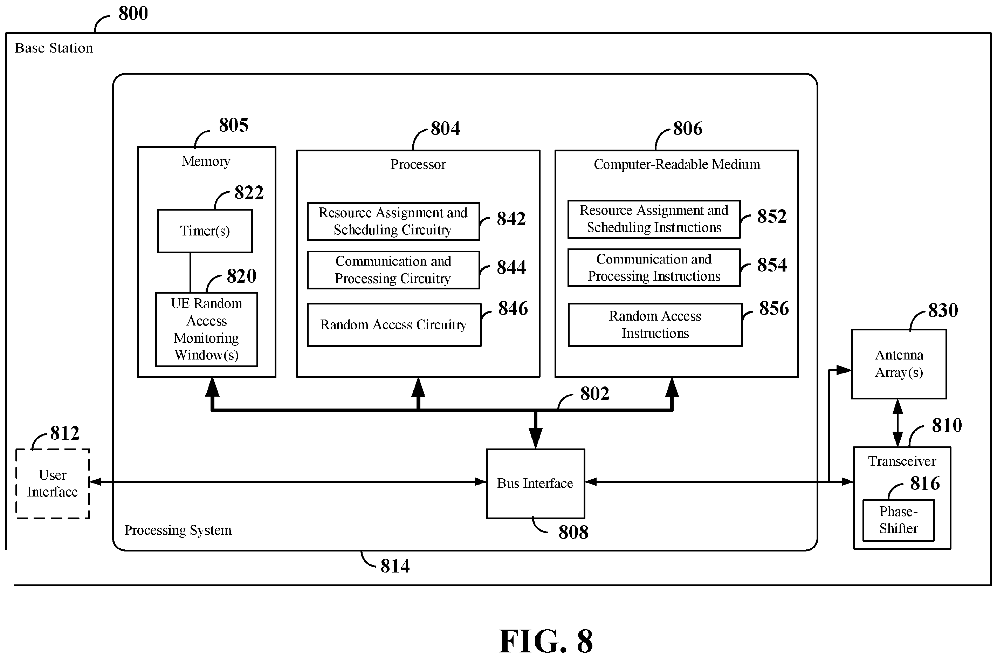

FIG. 8 is a conceptual diagram illustrating an example of a hardware implementation for an exemplary base station 800 employing a processing system 814. For example, the base station 800 may correspond to any of the base stations (e.g., gNBs) or other scheduling entities illustrated in any one or more of FIGs. 1, 2, 4, or 5.

In accordance with various aspects of the disclosure, an element, or any portion of an element, or any combination of elements may be implemented with a processing system 814 that includes one or more processors 804. The processing system 814 may be substantially the same as the processing system 714 illustrated in FIG. 7, including a bus interface 808, a bus 802, memory 805, a processor 804, and a computer-readable medium 806. Furthermore, the base station 800 may include an optional user interface 812 and a transceiver 810 substantially similar to those described above in FIG. 7. In some examples, the transceiver 810 may include a phase-shifter 816 for digital and/or analog beamforming via one or more antenna array(s) 830. The processor 804, as utilized in a base station 800, may be used to implement any one or more of the processes described below.

In some aspects of the disclosure, the processor 804 may include circuitry configured for various functions. For example, the processor 804 may include resource assignment and scheduling circuitry 842, configured to generate, schedule, and modify a resource assignment or grant of time-frequency resources (e.g., a set of one or more resource elements). For example, the resource assignment and scheduling circuitry 842 may schedule time-frequency resources within a plurality of time division duplex (TDD) and/or frequency division duplex (FDD) subframes, slots, and/or mini-slots to carry user data traffic and/or control information to and/or from multiple UEs.

In some examples, the resource assignment and scheduling circuitry 842 may be configured to schedule resources for the transmission of random access messages, such as msg1, msg2, msg3, and msg4 or msgA and msgB. The resource assignment and scheduling circuitry 842 may further be configured to reserve an unlicensed channel for a channel occupancy time (COT) and to schedule resources for the transmission of random access messages within the COT. The resource assignment and scheduling circuitry 842 may further be configured to execute resource assignment and scheduling instructions (software) 852 stored in the computer-readable medium 806 to implement one or more of the functions described herein.

The processor 804 may further include communication and processing circuitry 844, configured to communicate with a UE. In some examples, the communication and processing circuitry 844 may include one or more hardware components that provide the physical structure that performs processes related to wireless communication (e.g., signal reception and/or signal transmission) and signal processing (e.g., processing a received signal and/or processing a signal for transmission).

In some examples, the communication and processing circuitry 844 may be configured to transmit a random access message, such as msg2 or msg4 in a four-step random access procedure or msgB in a two-step random access procedure. The communication and processing circuitry 844 may further be configured to receive a random access message, such as msg1 or msg3 in a four-step random access procedure or msgA in a two-step random access procedure. The communication and processing circuitry 844 may further be configured to execute communication and processing instructions (software) 854 stored in the computer-readable medium 806 to implement one or more of the functions described herein.

The processor 804 may further include random access circuitry 846, configured to execute a random access procedure, such as a two-step random access procedure or a four-step random access procedure, with the UE. In some examples, the random access circuitry 846 may be configured to receive a first random access message (e.g., msg1 or msgA) from the UE and to generate and transmit a random access response message (e.g., msg2 or msgB) to the UE in response to the msg1 or msgA. In the four-step random access procedure, the random access circuitry 846 may further be configured to receive an uplink message (e.g., msg3) from the UE in response to msg2 and to transmit a contention resolution message (e.g., msg4) to the UE in response to msg3.

In some examples, the random access circuitry 846 may further be configured to select one or more random access monitoring windows 820 to be utilized by the UE in monitoring for random access messages from the base station 800. The random access monitoring windows 820 may include one or more of a random access response window for monitoring for msg2, a random access msgB response window for monitoring for msB, or a random access contention resolution window for monitoring for msg4. The random access circuitry 846 may be configured, for example, to select a selected random access monitoring window 820 for monitoring for a particular random access message (e.g., msg2, msg4, or msgB). The selected random access monitoring window may be selected from at least a first monitoring window and a second monitoring window, where the first monitoring window has a first duration of time that is different from a second duration of time of the second monitoring window. In some examples, each of the monitoring window durations may be associated with a respective RACH type of a plurality of RACH types. For example, each RACH type may be associated with a different respective UE type or data transmission type. In some examples, the first duration of time of the first monitoring window is less than the second duration of time of the second monitoring window. According to the present invention, the random access circuitry 846 is configured to select the first monitoring window having the shorter duration of time when a current data transmission type to be utilized by the UE is the small data transmission type.

In some examples, the msg1 or msgA may include a PRACH preamble indicating a RACH type associated with the UE (e.g., a current RACH type associated with a current data transmission type utilized by the UE). The RACH type may further indicate a respective monitoring window duration for one or more random access monitoring windows on the UE. In this example, the random access circuitry 846 may select the respective selected monitoring window 820 for one or more monitoring window types (e.g., random access response window, random access msgB response window, and random access contention resolution window) based on the PRACH preamble.

In some examples, the msgA may utilize resources for the PUSCH indicating the RACH type. In some examples, the payload for the PUSCH of msgA may have a payload size indicative of the RACH type, and thus, the monitoring window duration. For example, the payload size of the PUSCH of msgA may be smaller for shorter monitoring window durations and larger for longer monitoring window durations. In these examples, the random access circuitry 846 may select the respective selected monitoring window 820 for one or more monitoring window types (e.g., random access response window, random access msgB response window, and random access contention resolution window) based on the resources utilized for the PUSCH of msgA or the payload size of the PUSCH of msgA.

The random access circuitry 846 may further be configured to include an indication of a selected monitoring window duration for the random access contention resolution window in msg2. For example, the msg2 may include a duration of time selected for the random access contention resolution window or an index indicating the selected duration of time. As another example, the uplink grant for msg3 included in msg2 may indicate the selected duration of time. In other examples, the uplink grant may include a plurality of uplink grants, each associated with a different duration of time for the random access contention window. In this example, the random access circuitry 846 may be configured to select the selected monitoring window duration of time for the random access contention resolution monitoring window based on the uplink resources utilized by the UE to transmit msg3. In other examples, the random access circuitry 846 may select the selected monitoring window duration of time for the random access contention resolution message based on a payload size of msg 3. For example, the payload size of the msg3 may be smaller for shorter monitoring window durations and larger for longer monitoring window durations.

The random access circuitry 846 may further be configured to initialize a timer 822 with the respective selected duration of time for the respective selected monitoring window(s) 820. The random access circuitry 846 may utilize the timer 822 to operate together with the resource assignment and scheduling circuitry 842 to schedule resources for the transmission of msg2, msgB, and/or msg4 within the selected monitoring window(s) 820. The random access circuitry 846 further be configured to execute random access instructions (software) 856 stored in the computer-readable medium 806 to implement one or more of the functions described herein.

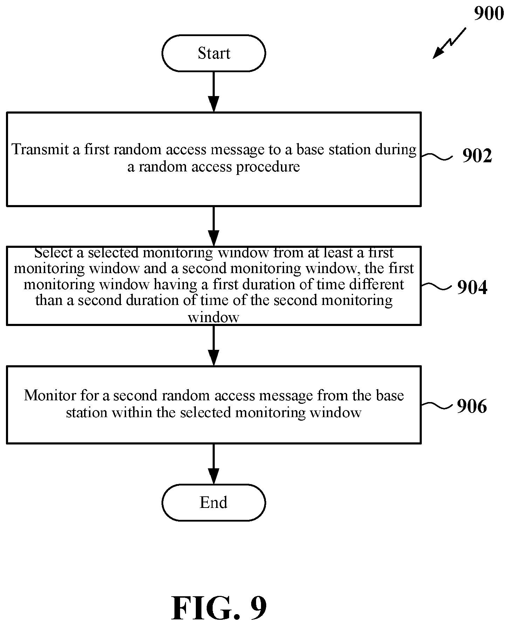

FIG. 9 is a flow chart illustrating an exemplary process 900 for selecting a random access monitoring window at a UE according to some aspects. As described below, some or all illustrated features may be omitted in a particular implementation within the scope of the present disclosure, and some illustrated features may not be required for implementation of all embodiments. In some examples, the process 900 may be carried out by the UE 700 illustrated in FIG. 7. In some examples, the process 900 may be carried out by any suitable apparatus or means for carrying out the functions or algorithm described below.

At block 902, the UE may transmit a first random access message to a base station during a random access procedure. In some examples, the UE may select a physical random access channel (PRACH) preamble for the first random access message based on a current RACH type of a plurality of RACH types associated with a current data transmission type of a plurality of data transmission types utilized by the UE. In some examples, the random access procedure is a two-step random access procedure and the first random access message includes a msgA in the two-step random access procedure. In this example, the UE may select at least one of a physical random access channel (PRACH) preamble or resources for a physical uplink shared channel of the first random access message based on the current RACH type associated with the current data transmission type. For example, the random access circuitry 744, together with the communication and processing circuitry 742 and transceiver 710, shown and described above in connection with FIG. 7 may provide a means for transmit the first random access message to the base station.

At 904, the UE may select a selected monitoring window from at least a first monitoring window and a second monitoring window. The first monitoring window has a first duration of time different than a second duration of time of the second monitoring window. In some examples, the selected monitoring window is within a channel occupancy time of an unlicensed channel.

In some examples, the UE may initialize a timer with the first duration of time or the second duration of time based on the selected monitoring window. In some examples, the UE may initialize the timer upon transmission of the first random access message. In this example, each of the first duration of time and the second duration of time may be associated with a different respective RACH type, and each RACH type may be associated with a different respective data transmission type. In some examples, the first duration of time is less than the second duration of time and the UE may select the first monitoring window as the selected monitoring window when the current data transmission type is a small data transmission type.

In some examples, the first duration of time is less than the second duration of time and the selected monitoring window is the first monitoring window. In this example, the UE may initialize the timer at a start time offset from a transmission time of the first random access message by an offset amount of time. In some examples, the second random access message is a random access response and the selected monitoring window is a random access response window. For example, the random access procedure may include a two-step random access procedure and the second random access message may include a msgB in the two-step random access procedure. In this example, the msgB includes the random access response and a contention resolution message in the two-step random access procedure and the random access response window is a random access msgB response window.

In examples in which the random access procedure is the two-step random access procedure and the first random access message is a msgA of the two-step random access procedure, the UE may further select the monitoring window based on a payload size of the msgA or resources utilized for the msgA.

In some examples, the first random access message includes a physical random access channel (PRACH) preamble and the second random access message includes a contention resolution message. In this example, the UE may further receive a third random access message including a random access response in response to the first random access message, and transmit a fourth random access message including an uplink message for contention resolution in response to the random access response. In this example, the UE may select the selected monitoring window based on a payload size of the uplink message or resources utilized for the uplink message. As another example, the UE may receive an indication of the selected monitoring window in the random access response. For example, the random access monitoring window circuitry 746, together with the random access circuitry 744, shown and described above in connection with FIG. 7 may provide a means to select the selected monitoring window.

At 906, the UE may monitor for a second random access message from the base station within the selected monitoring window. In some examples, the first random access message includes a physical random access channel (PRACH) preamble and the second random access message includes a contention resolution message. In this example, the UE may further receive a third random access message including a random access response in response to the first random access message, and transmit a fourth random access message including an uplink message for contention resolution in response to the random access response. In this example, the UE may monitor for the second random access message in response to the uplink message, where the selected monitoring window is a random access contention resolution window. For example, the random access circuitry 744 shown and described above in connection with FIG. 7 may monitor for the second random access message from the base station within the selected monitoring window.

In one configuration, the UE 700 includes various means as described in the present disclosure. In one aspect, the aforementioned means may be the processor 704 shown in FIG. 7 configured to perform the functions recited by the aforementioned means. In another aspect, the aforementioned means may be a circuit or any apparatus configured to perform the functions recited by the aforementioned means.

Of course, in the above examples, the circuitry included in the processor 704 is merely provided as an example, and other means for carrying out the described functions may be included within various aspects of the present disclosure, including but not limited to the instructions stored in the computer-readable medium 706, or any other suitable apparatus or means described in any one of the FIGs. 1, 2, and/or 4-6, and utilizing, for example, the processes and/or algorithms described herein in relation to FIG. 9.

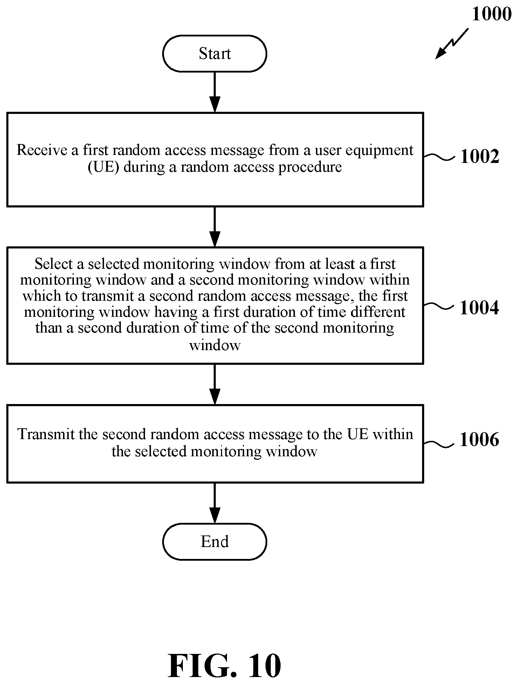

FIG. 10 is a flow chart illustrating an exemplary process 1000 for selecting a random access monitoring window at a base station according to some aspects. As described below, some or all illustrated features may be omitted in a particular implementation within the scope of the present disclosure, and some illustrated features may not be required for implementation of all embodiments. In some examples, the process 1000 may be carried out by the base station 800 illustrated in FIG. 8. In some examples, the process 1000 may be carried out by any suitable apparatus or means for carrying out the functions or algorithm described below.

At block 1002, the base station may receive a first random access message from a user equipment (UE) during a random access procedure. For example, the random access circuitry 846, together with the communication and processing circuitry 844 and transceiver 810, shown and described above in connection with FIG. 8 may provide a means to receive the first random access message.

At block 1004, the base station may select a selected monitoring window from at least a first monitoring window and a second monitoring window within which to transmit a second random access message. The first monitoring window has a first duration of time different than a second duration of time of the second monitoring window. In some examples, the selected monitoring window is within a channel occupancy time of an unlicensed channel. In some examples, the base station may initialize a timer with the first duration of time or the second duration of time based on the selected monitoring window.

In some examples, the first duration of time is less than the second duration of time and the selected monitoring window is the first monitoring window. In this example, the second random access message may be a random access response and the selected monitoring window may be a random access response window. As an example, the random access procedure may include a two-step random access procedure and the second random access message may include a msgB in the two-step random access procedure. In this example, the msgB includes the random access response and a contention resolution message in the two-step random access procedure and the random access response window is a random access msgB response window.

In some examples, each of the first duration of time and the second duration of time is associated with a different respective random access channel (RACH) type of a plurality of RACH types. In some examples, the plurality of RACH types are each associated with a different respective data transmission type of a plurality of data transmission types. In some examples, the base station may select the selected monitoring window based on a physical random access channel (PRACH) preamble of the first random access message. The PRACH preamble may indicate a current RACH type of the plurality of RACH types associated with a current data transmission type of the plurality of data transmission types utilized by the UE.

In some examples, the random access procedure is a two-step random access procedure and the first random access message includes a msgA in the two-step random access procedure. In this example, the base station may select the selected monitoring window based on at least one of a physical random access channel (PRACH) preamble or resources for a physical uplink shared channel of the first random access message, each indicating a current RACH type of the plurality of RACH types associated with a current data transmission type of the plurality of data transmission types utilized by the UE.

In some examples, the first random access message includes a physical random access channel (PRACH) preamble and the second random access message includes a contention resolution message. In this example, the base station may further transmit a third random access message comprising a random access response in response to the first random access message, and receive a fourth random access message comprising an uplink message for contention resolution in response to the random access response. In this example, the base station may select the selected monitoring window based on a payload size of the uplink message or resources utilized for the uplink message. In examples in which the random access procedure is the two-step random access procedure, the base station may select the selected monitoring window based on a payload size of the msgA or resources utilized for the msgA.

In examples in which the random access procedure is a four-step random access procedure, the base station may include an indication of the selected monitoring window within the random access response. For example, the random access circuitry 846 shown and described above in connection with FIG. 8 may provide a means to select the selected monitoring window.

At 906, the base station may transmit the second random access message to the UE within the selected monitoring window. In some examples, the first random access message includes a physical random access channel (PRACH) preamble and the second random access message includes a contention resolution message. In this example, the base station may further transmit a third random access message including a random access response in response to the first random access message and receive a fourth random access message including an uplink message for contention resolution in response to the random access response. The base station may then transmit the second random access response in response to the uplink message. In this example, the selected monitoring window may include a random access contention resolution window. For example, the random access circuitry 846, together with the communication and processing circuitry 844, shown and described above in connection with FIG. 8 may provide a means to transmit the second random access message to the UE.

In one configuration, the base station 800 includes various means as described in the present disclosure. In one aspect, the aforementioned means may be the processor 804 shown in FIG. 8 configured to perform the functions recited by the aforementioned means. In another aspect, the aforementioned means may be a circuit or any apparatus configured to perform the functions recited by the aforementioned means.

Of course, in the above examples, the circuitry included in the processor 804 is merely provided as an example, and other means for carrying out the described functions may be included within various aspects of the present disclosure, including but not limited to the instructions stored in the computer-readable medium 806, or any other suitable apparatus or means described in any one of the FIGs. 1, 2, and/or 4-6, and utilizing, for example, the processes and/or algorithms described herein in relation to FIG. 10.

Additional information about various aspects of the disclosure and some exemplary embodiments of the invention are provided in the attached Appendix, filed herewith.

Several aspects of a wireless communication network have been presented with reference to an exemplary implementation. As those skilled in the art will readily appreciate, various aspects described throughout this disclosure may be extended to other telecommunication systems, network architectures and communication standards.

By way of example, various aspects may be implemented within other systems defined by 3GPP, such as Long-Term Evolution (LTE), the Evolved Packet System (EPS), the Universal Mobile Telecommunication System (UMTS), and/or the Global System for Mobile (GSM). Various aspects may also be extended to systems defined by the 3rd Generation Partnership Project 2 (3GPP2), such as CDMA2000 and/or Evolution-Data Optimized (EV-DO). Other examples may be implemented within systems employing IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

Within the present disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first object may be coupled to a second object even though the first object is never directly physically in contact with the second object. The terms "circuit" and "circuitry" are used broadly, and intended to include both hardware implementations of electrical devices and conductors that, when connected and configured, enable the performance of the functions described in the present disclosure, without limitation as to the type of electronic circuits, as well as software implementations of information and instructions that, when executed by a processor, enable the performance of the functions described in the present disclosure.

One or more of the components, steps, features and/or functions illustrated in FIGs. 1-16 may be rearranged and/or combined into a single component, step, feature or function or embodied in several components, steps, or functions. Additional elements, components, steps, and/or functions may also be added without departing from novel features disclosed herein. The apparatus, devices, and/or components illustrated in FIGs. 1, 2, 4-7, 9-12, and 14 may be configured to perform one or more of the methods, features, or steps described herein. The novel algorithms described herein may also be efficiently implemented in software and/or embedded in hardware.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of" a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

### 1. Description

### 1.1 Background

When RACH is performed, a significant amount of power is spent on monitoring the response messages. The UE has to check PDCCH every slot whether there is a response to its transmission (msg2/msg4 in 4-step RACH) and msgB in 2-step RACH.

For regular UEs and traffic, such power consumption is not an important issue considering the overall actitivy. However, for IoT type devices, the above power can dominate their overall consumption. This is especially the case when "small data" transmission is used, where the UE occasionally sends a small amount of data and goes back to sleep (e.g. sensors, meters).

In both LTE and NR, there are no specific mechanisms to reduce the downlink monitoring during RACH for IoT type devices. In this IDF, we cover these enhancements.

### 2. Solution

The main idea is to limit the duration of monitoring window. For example, in 2-step RACH, the UE starts a "msgB-ResponseWindow" after transmitting msgA. The window duration could be up to 40ms. The UE will need to monitor downlink up to 40ms to get a response before declaring RACH failure.

To reduce this duration, a minimum time to start the window can be defined. In addition, for small data transmission, a new maximum time other thant the one configured for generic RACH can be defined.

### Key Points:

- For 4-step RACH:
   ∘ Defining an offset value where the ra-ResponseWindow timer starts after msg1 transmission plus this offset
   o Definining a new ra-ResponseWindow which only applies to RACH configured for small data transmission
      ▪ This can be generalized to different timers for different RACH types
   o The gNB determining the different monitoring times for this RACH based on the received preamble.
   ∘ Defining an offset value where the *ra-ContentionResolutionTimer* after msg1 transmission plus this offset
   ∘ Definining a new *ra-ContentionResolutionTimer* which only applies to RACH configured for small data transmission:
      ▪ The gNB determining the new timer based on the given grant for msg3
- For 2-step RACH:
   ∘ Defining an offset value where the ra-msgB-ResponseWindow timer starts after msgA transmission plus this offset
   ∘ Definining a new ra-msgB-ResponseWindow which only applies to RACH configured for small data transmission
      ▪ This can be generalized to different timers for different RACH types
   o The gNB determining the different monitoring times for this RACH based on the received preamble and/or PUSCH grant of msgA
- Where the new window timer for msg3 or msgA can be a function of msg3 or msgA payload size (assuming gNB can need more time for larger payloads) or the resources used for msg3 or msgA:
- Where the timer to be used for msg3 or an index referencing the timer value can be indicated in msg2 for 4-step RACH
- For unlicensed operation:
   ∘ Using different timer values when the RACH happens in a gNB initiated COT
      ▪ Msg1/msg3 or msgA is transmitted in this COT and the response can come back in the same COT

## Claims

1. A method (900) of wireless communication at a user equipment, UE, comprising:
transmitting (902) a first random access message to a base station during a random access procedure;
selecting (904) a selected monitoring window from at least a first monitoring window and a second monitoring window, the first monitoring window comprising a first duration of time less than a second duration of time of the second monitoring window, wherein the selecting the selected monitoring window further comprises selecting the first monitoring window as the selected monitoring window when a current data transmission type of the plurality of data transmission types utilized by the UE comprises a small data transmission type; and
monitoring (906) for a second random access message from the base station within the selected monitoring window.

2. The method (900) of claim 1, further comprising:
initializing a timer with the first duration of time or the second duration of time based on the selected monitoring window.

3. The method (900) of claim 2, wherein the first duration of time is less than the second duration of time and the selected monitoring window comprises the first monitoring window, wherein the initializing the timer further comprises:
initializing the timer at a start time offset from a transmission time of the first random access message by an offset amount of time.

4. The method (900) of claim 3, wherein the second random access message comprises a random access response and the selected monitoring window comprises a random access response window, wherein the random access procedure comprises a two-step random access procedure and the second random access message comprises a msgB in the two-step random access procedure, wherein the msgB comprises the random access response and a contention resolution message in the two-step random access procedure and the random access response window comprises a random access msgB response window.

5. The method (900) of claim 3, wherein the first random access message comprises a physical random access channel, PRACH preamble and the second random access message comprises a contention resolution message, and further comprising:
receiving a third random access message comprising a random access response in response to the first random access message; and
transmitting a fourth random access message comprising an uplink message for contention resolution in response to the random access response, and wherein the monitoring for the second random access message further comprises:
monitoring for the second random access message in response to the uplink message, wherein the selected monitoring window comprises a random access contention resolution window.

6. The method (900) of claim 2, wherein the initializing the timer further comprises:
initializing the timer upon transmission of the first random access message, wherein each of the first duration of time and the second duration of time is associated with a different respective random access channel, RACH type of a plurality of RACH types, wherein the plurality of RACH types are each associated with a different respective data transmission type of a plurality of data transmission types.

7. The method (900) of claim 1, wherein the transmitting the first random access message further comprises:
selecting a physical random access channel, PRACH preamble for the first random access message based on a current RACH type of the plurality of RACH types associated with a current data transmission type of the plurality of data transmission types utilized by the UE.

8. The method (900) of claim 1, wherein the random access procedure comprises a two-step random access procedure and the first random access message comprises a msgA in the two-step random access procedure, and wherein the transmitting the first random access message further comprises:
selecting at least one of a physical random access channel, PRACH preamble or resources for a physical uplink shared channel of the first random access message based on a current RACH type of the plurality of RACH types associated with a current data transmission type of the plurality of data transmission types utilized by the UE.

9. The method (900) of claim 1, wherein the first random access message comprises a physical random access channel, PRACH preamble and the second random access message comprises a contention resolution message, and further comprising:
receiving a third random access message comprising a random access response in response to the first random access message; and
transmitting a fourth random access message comprising an uplink message for contention resolution in response to the random access response, and wherein the selecting the selected monitoring window further comprises:
selecting the selected monitoring window based on a payload size of the uplink message or resources utilized for the uplink message; or
receiving an indication of the selected monitoring window in the random access response.

10. The method (900) of claim 1, wherein the random access procedure comprises a two-step random access procedure and the first random access message comprises a msgA of the two-step random access procedure, and wherein the selecting the selected monitoring window further comprises:
selecting the selected monitoring window based on a payload size of the msgA or resources utilized for the msgA.

11. A user equipment comprising means configured for executing the method (900) of any one of claims 1 to 10.

12. A method (1000) of wireless communication at a base station, comprising:
receiving (1002) a first random access message from a user equipment, UE during a random access procedure;
selecting (1004) a selected monitoring window from at least a first monitoring window and a second monitoring window, the first monitoring window comprising a first duration of time less than a second duration of time of the second monitoring window, wherein the selecting the selected monitoring window further comprises selecting the first monitoring window as the selected monitoring window when a current data transmission type of the plurality of data transmission types utilized by the UE comprises a small data transmission type; and
transmitting (1006) a second random access message to the UE within the selected monitoring window.

13. A base station comprising means configured for executing the method (1000) of claim 12.

14. A computer program comprising program instructions which, when the program is executed by a computer, carry out all steps of the method of anyone of claims 1 to 10 or 12.

## Patentansprüche

1. Verfahren (900) zur drahtlosen Kommunikation an einem Benutzergerät, UE, umfassend:
Übertragen (902) einer ersten Zufallszugriffsnachricht an eine Basisstation während einer Zufallszugriffsprozedur;
Auswählen (904) eines ausgewählten Überwachungsfensters aus zumindest einem ersten Überwachungsfenster und einem zweiten Überwachungsfenster, wobei das erste Überwachungsfenster eine erste Zeitdauer umfasst, die kürzer ist als eine zweite Zeitdauer des zweiten Überwachungsfensters, wobei das Auswählen des ausgewählten Überwachungsfensters weiterhin das Auswählen des ersten Überwachungsfensters als das ausgewählte Überwachungsfenster umfasst, wenn ein aktueller Datenübertragungstyp der Vielzahl von Datenübertragungstypen, die von dem UE verwendet werden, einen kleinen Datenübertragungstyp umfasst; und
Überwachen (906) auf eine zweite Zufallszugriffsnachricht von der Basisstation innerhalb des ausgewählten Überwachungsfensters.

2. Verfahren (900) gemäß Anspruch 1, weiterhin umfassend:
Initialisieren eines Zeitgebers mit der ersten Zeitdauer oder der zweiten Zeitdauer basierend auf dem ausgewählten Überwachungsfenster.

3. Verfahren (900) gemäß Anspruch 2, wobei die erste Zeitdauer kürzer ist als die zweite Zeitdauer und das ausgewählte Überwachungsfenster das erste Überwachungsfenster umfasst, wobei das Initialisieren des Zeitgebers weiterhin umfasst:
Initialisieren des Zeitgebers zu einer Startzeit, die von einer Übertragungszeit der ersten Zufallszugriffsnachricht um eine Versatzzeitdauer versetzt ist.

4. Verfahren (900) gemäß Anspruch 3, wobei die zweite Zufallszugriffsnachricht eine Zufallszugriffsantwort umfasst und das ausgewählte Überwachungsfenster ein Zufallszugriffsantwortfenster umfasst, wobei die Zufallszugriffsprozedur eine zweistufige Zufallszugriffsprozedur umfasst und die zweite Zufallszugriffsnachricht eine MsgB in der zweistufigen Zufallszugriffsprozedur umfasst, wobei die MsgB die Zufallszugriffsantwort und eine Konfliktauflösungsnachricht in der zweistufigen Zufallszugriffsprozedur umfasst und das Zufallszugriffsantwortfenster ein Zufallszugriffs-MsgB-Antwortfenster umfasst.

5. Verfahren (900) gemäß Anspruch 3, wobei die erste Zufallszugriffsnachricht eine physikalische Zufallszugriffskanal-, PRACH-, Präambel umfasst und die zweite Zufallszugriffsnachricht eine Konfliktauflösungsnachricht umfasst, und weiterhin umfassend:
Empfangen einer dritten Zufallszugriffsnachricht, die eine Zufallszugriffsantwort umfasst, als Antwort auf die erste Zufallszugriffsnachricht; und
Übertragen einer vierten Zufallszugriffsnachricht, die eine Uplink-Nachricht zur Konfliktauflösung umfasst, als Antwort auf die Zufallszugriffsantwort, und wobei das Überwachen auf die zweite Zufallszugriffsnachricht weiterhin umfasst:
Überwachen auf die zweite Zufallszugriffsnachricht als Antwort auf die Uplink-Nachricht, wobei das ausgewählte Überwachungsfenster ein Zufallszugriffs-Konfliktauflösungsfenster umfasst.

6. Verfahren (900) gemäß Anspruch 2, wobei das Initialisieren des Zeitgebers weiterhin umfasst:
Initialisieren des Zeitgebers bei Übertragung der ersten Zufallszugriffsnachricht, wobei jede der ersten Zeitdauer und der zweiten Zeitdauer mit einem unterschiedlichen jeweiligen Zufallszugriffskanal-, RACH-, Typ einer Vielzahl von RACH-Typen assoziiert ist, wobei die Vielzahl von RACH-Typen jeweils mit einem unterschiedlichen jeweiligen Datenübertragungstyp einer Vielzahl von Datenübertragungstypen assoziiert ist.

7. Verfahren (900) gemäß Anspruch 1, wobei das Übertragen der ersten Zufallszugriffsnachricht weiterhin umfasst:
Auswählen einer physikalischen Zufallszugriffskanal-, PRACH-, Präambel für die erste Zufallszugriffsnachricht basierend auf einem aktuellen RACH-Typ der Vielzahl von RACH-Typen, der mit einem aktuellen Datenübertragungstyp der Vielzahl von Datenübertragungstypen assoziiert ist, die von dem UE verwendet werden.

8. Verfahren (900) gemäß Anspruch 1, wobei die Zufallszugriffsprozedur eine zweistufige Zufallszugriffsprozedur umfasst und die erste Zufallszugriffsnachricht eine MsgA in der zweistufigen Zufallszugriffsprozedur umfasst, und wobei das Übertragen der ersten Zufallszugriffsnachricht weiterhin umfasst:
Auswählen zumindest eines von einer physikalischen Zufallszugriffskanal-, PRACH-, Präambel oder Ressourcen für einen gemeinsam genutzten physikalischen Uplink-Kanal der ersten Zufallszugriffsnachricht basierend auf einem aktuellen RACH-Typ der Vielzahl von RACH-Typen, der mit einem aktuellen Datenübertragungstyp der Vielzahl von Datenübertragungstypen assoziiert ist, die von dem UE verwendet werden.

9. Verfahren (900) gemäß Anspruch 1, wobei die erste Zufallszugriffsnachricht eine physikalische Zufallszugriffskanal-, PRACH-, Präambel umfasst und die zweite Zufallszugriffsnachricht eine Konfliktauflösungsnachricht umfasst, und weiterhin umfassend:
Empfangen einer dritten Zufallszugriffsnachricht, die eine Zufallszugriffsantwort umfasst, als Antwort auf die erste Zufallszugriffsnachricht; und
Übertragen einer vierten Zufallszugriffsnachricht, die eine Uplink-Nachricht zur Konfliktauflösung umfasst, als Antwort auf die Zufallszugriffsantwort, und wobei das Auswählen des ausgewählten Überwachungsfensters weiterhin umfasst:
Auswählen des ausgewählten Überwachungsfensters basierend auf einer Nutzlastgröße der Uplink-Nachricht oder Ressourcen, die für die Uplink-Nachricht verwendet werden; oder
Empfangen einer Anzeige des ausgewählten Überwachungsfensters in der Zufallszugriffsantwort.

10. Verfahren (900) gemäß Anspruch 1, wobei die Zufallszugriffsprozedur eine zweistufige Zufallszugriffsprozedur umfasst und die erste Zufallszugriffsnachricht eine MsgA der zweistufigen Zufallszugriffsprozedur umfasst, und wobei das Auswählen des ausgewählten Überwachungsfensters weiterhin umfasst:
Auswählen des ausgewählten Überwachungsfensters basierend auf einer Nutzlastgröße der MsgA oder Ressourcen, die für die MsgA verwendet werden.

11. Benutzergerät, umfassend Mittel, die zum Ausführen des Verfahrens (900) gemäß einem der Ansprüche 1 bis 10 konfiguriert sind.

12. Verfahren (1000) zur drahtlosen Kommunikation an einer Basisstation, umfassend:
Empfangen (1002) einer ersten Direktzugriffsnachricht von einem Benutzergerät, UE, während einer Direktzugriffsprozedur;
Auswählen (1004) eines ausgewählten Überwachungsfensters aus zumindest einem ersten Überwachungsfenster und einem zweiten Überwachungsfenster, wobei das erste Überwachungsfenster eine erste Zeitdauer umfasst, die kürzer ist als eine zweite Zeitdauer des zweiten Überwachungsfensters, wobei das Auswählen des ausgewählten Überwachungsfensters weiterhin das Auswählen des ersten Überwachungsfensters als das ausgewählte Überwachungsfenster umfasst, wenn ein aktueller Datenübertragungstyp der Vielzahl von Datenübertragungstypen, die von dem UE verwendet werden, einen kleinen Datenübertragungstyp umfasst; und
Übertragen (1006) einer zweiten Zufallszugriffsnachricht an das UE innerhalb des ausgewählten Überwachungsfensters.

13. Basisstation, umfassend Mittel, die zum Ausführen des Verfahrens (1000) gemäß Anspruch 12 konfiguriert sind.

14. Computerprogramm, umfassend Programmanweisungen, die, wenn das Programm von einem Computer ausgeführt wird, alle Schritte des Verfahrens gemäß einem der Ansprüche 1 bis 10 oder 12 ausführen.

## Revendications

1. Un procédé (900) de communication sans fil au niveau d'un équipement utilisateur, UE, comprenant :
la transmission (902) d'un premier message d'accès aléatoire à une station de base pendant une procédure d'accès aléatoire ;
la sélection (904) d'une fenêtre de surveillance sélectionnée parmi au moins une première fenêtre de surveillance et une seconde fenêtre de surveillance, la première fenêtre de surveillance ayant une première durée inférieure à une seconde durée de la seconde fenêtre de surveillance, dans lequel la sélection de la fenêtre de surveillance sélectionnée comprend en outre la sélection de la première fenêtre de surveillance comme fenêtre de surveillance sélectionnée lorsqu'un type de transmission de données courant parmi la pluralité de types de transmission de données utilisés par l'UE comprend un type de transmission de petites données ; et
la surveillance (906) d'un deuxième message d'accès aléatoire provenant de la station de base dans la fenêtre de surveillance sélectionnée.

2. Le procédé (900) selon la revendication 1, comprenant en outre :
l'initialisation d'une temporisation avec la première durée ou la seconde durée en fonction de la fenêtre de surveillance sélectionnée.

3. Le procédé (900) selon la revendication 2, dans lequel la première durée est inférieure à la seconde durée et la fenêtre de surveillance sélectionnée comprend la première fenêtre de surveillance, dans lequel l'initialisation de la temporisation comprend en outre:
l'initialisation de la temporisation à un décalage de temps de départ par rapport à un temps de transmission du premier message d'accès aléatoire d'une quantité de temps de décalage.

4. Le procédé (900) selon la revendication 3, dans lequel le deuxième message d'accès aléatoire comprend une réponse d'accès aléatoire et la fenêtre de surveillance sélectionnée comprend une fenêtre de réponse d'accès aléatoire, dans lequel la procédure d'accès aléatoire comprend une procédure d'accès aléatoire en deux étapes et le deuxième message d'accès aléatoire comprend un msgB dans la procédure d'accès aléatoire en deux étapes, dans lequel le msgB comprend la réponse d'accès aléatoire et un message de résolution de contention dans la procédure d'accès aléatoire en deux étapes et la fenêtre de réponse d'accès aléatoire comprend une fenêtre de réponse de msgB d'accès aléatoire.

5. Le procédé (900) selon la revendication 3, dans lequel le premier message d'accès aléatoire comprend un préambule de canal physique d'accès aléatoire, PRACH, et le deuxième message d'accès aléatoire comprend un message de résolution de contention, et comprenant en outre :
la réception d'un troisième message d'accès aléatoire comprenant une réponse d'accès aléatoire en réponse au premier message d'accès aléatoire ; et
la transmission d'un quatrième message d'accès aléatoire comprenant un message de liaison montante pour la résolution de contention en réponse à la réponse d'accès aléatoire, et dans lequel la surveillance du deuxième message d'accès aléatoire comprend en outre :
la surveillance du deuxième message d'accès aléatoire en réponse au message de liaison montante, dans lequel la fenêtre de surveillance sélectionnée comprend une fenêtre de résolution de contention d'accès aléatoire.

6. Le procédé (900) selon la revendication 2, dans lequel l'initialisation de la temporisation comprend en outre:
l'initialisation de la temporisation lors de la transmission du premier message d'accès aléatoire, dans lequel chacune parmi la première durée et la seconde durées est associée à un type de canal d'accès aléatoire, RACH, respectif différent parmi une pluralité de types de RACH, dans lequel la pluralité de types de RACH sont associés chacun à un type de transmission de données respectif différent parmi une pluralité de types de transmission de données.

7. Le procédé (900) selon la revendication 1, dans lequel la transmission du premier message d'accès aléatoire comprend en outre :
la sélection d'un préambule de canal physique d'accès aléatoire, PRACH, pour le premier message d'accès aléatoire sur la base d'un type de RACH courant de la pluralité de types de RACH associés à un type de transmission de données courant de la pluralité de types de transmission de données utilisés par l'UE.

8. Le procédé (900) selon la revendication 1, dans lequel la procédure d'accès aléatoire comprend une procédure d'accès aléatoire en deux étapes et le premier message d'accès aléatoire comprend un msgA dans la procédure d'accès aléatoire en deux étapes, et dans lequel la transmission du premier message d'accès aléatoire comprend en outre :
la sélection d'au moins un parmi un préambule de canal physique d'accès aléatoire, PRACH, ou des ressources pour un canal physique partagé de liaison montante du premier message d'accès aléatoire sur la base d'un type de RACH courant parmi la pluralité de types de RACH associés à un type de transmission de données courant parmi la pluralité de types de transmission de données utilisés par l'UE.

9. Le procédé (900) selon la revendication 1, dans lequel le premier message d'accès aléatoire comprend un préambule de canal physique d'accès aléatoire, PRACH, et le deuxième message d'accès aléatoire comprend un message de résolution de contention, et comprenant en outre:
la réception d'un troisième message d'accès aléatoire comprenant une réponse d'accès aléatoire en réponse au premier message d'accès aléatoire ; et
la transmission d'un quatrième message d'accès aléatoire comprenant un message de liaison montante pour la résolution de contention en réponse à la réponse d'accès aléatoire, et dans lequel la sélection de la fenêtre de surveillance sélectionnée comprend en outre :
la sélection de la fenêtre de surveillance sélectionnée sur la base d'une taille de charge utile du message de liaison montante ou de ressources utilisées pour le message de liaison montante ; ou
la réception d'une indication de la fenêtre de surveillance sélectionnée dans la réponse d'accès aléatoire.

10. Le procédé (900) selon la revendication 1, dans lequel la procédure d'accès aléatoire comprend une procédure d'accès aléatoire en deux étapes et le premier message d'accès aléatoire comprend un msgA de la procédure d'accès aléatoire en deux étapes, et dans lequel la sélection de la fenêtre de surveillance sélectionnée comprend en outre :
la sélection de la fenêtre de surveillance sélectionnée sur la base d'une taille de charge utile du msgA ou de ressources utilisées pour le msgA.

11. Un équipement utilisateur comprenant des moyens configurés pour exécuter le procédé (900) selon l'une des revendications 1 à 10.

12. Un procédé (1000) de communication sans fil au niveau d'une station de base, comprenant :
la réception (1002) d'un premier message d'accès aléatoire à partir d'un équipement utilisateur, UE, pendant une procédure d'accès aléatoire ;
la sélection (1004) d'une fenêtre de surveillance sélectionnée parmi au moins une première fenêtre de surveillance et une seconde fenêtre de surveillance, la première fenêtre de surveillance ayant une première durée inférieure à une seconde durée de la seconde fenêtre de surveillance, dans lequel la sélection de la fenêtre de surveillance sélectionnée comprend également la sélection de la première fenêtre de surveillance comme fenêtre de surveillance sélectionnée lorsqu'un type de transmission de données courant parmi la pluralité de types de transmission de données utilisés par l'UE comprend un type de transmission de petites données ; et
la transmission (1006) d'un deuxième message d'accès aléatoire à l'UE dans la fenêtre de surveillance sélectionnée.

13. Une station de base comprenant des moyens configurés pour exécuter le procédé (1000) selon la revendication 12.

14. Un programme de calculateur comprenant des instructions de programme qui, lorsque le programme est exécuté par un calculateur, réalisent toutes les étapes du procédé selon l'une des revendications 1 à 10 ou 12.
